# EUROPÄISCHE PATENTSCHRIFT

(11) **EP 3 178 148 B1**
(45) Veröffentlichungstag und Bekanntmachung des Hinweises auf die Patenterteilung: **26.09.2018**
(21) Anmeldenummer: 15747456.0
(22) Anmeldetag: 03.08.2015
(51) Int. Cl.: H02J 50/00, B60L 11/18, H02J 5/00, H02J 7/02

(54) **SPULENÜBERDECKUNG**
COIL OVERLAP
RECOUVREMENT DE BOBINE

(30) Priorität: 04.08.2014 DE 102014215350
(43) Veröffentlichungstag der Anmeldung: 14.06.2017
(73) Patentinhaber: Fraunhofer-Gesellschaft zur Förderung der angewandten Forschung e.V., 80686 München (DE)
(72) Erfinder: DRÄGER, Tobias, 91083 Baiersdorf (DE); BERNHARD, Josef, 92507 Nabburg (DE); GÜTTLER, Martin, 91126 Rednitzhembach (DE); HARTMANN, Markus, 92237 Sulzbach-Rosenberg (DE)
(74) Vertreter: Hersina, Günter
(86) Internationale Anmeldenummer: PCT/EP2015/067827
(87) Internationale Veröffentlichungsnummer: WO 2016/020326

(56) Entgegenhaltungen:
- WO-A2-2013/088238
- US-A1- 2014 159 651

## Beschreibung

Ausführungsbeispiele der vorliegenden Erfindung beziehen sich auf eine Messvorrichtung, ein Positionierungssystem und ein Messverfahren. Weitere Ausführungsbeispiele beziehen sich auf eine Datenübertragungsvorrichtung, ein Datenübertragungssystem und ein Verfahren zur Datenübertragung bei vorgegebener Position. Manche Ausführungsbeispiele beziehen sich auf eine Spulenüberdeckung.

Systeme zur drahtlosen Energieübertragung mittels Spulen (magnetisches Feld) sind in ihrer Effizienz stark von der korrekten Ausrichtung und damit genügenden Verkoppelung von Sende- und Empfangsspule abhängig. Schon kleine Abweichungen von der idealen Position haben große Auswirkung auf die erreichbare Signalstärke am Empfänger und den Systemwirkungsgrad.

Aktuell gibt es mehrere Ansätze, um die exakte Positionierung zu gewährleisten. Bekannt ist eine mechanische Fixierung der Spule mittels Gehäuseform oder Magneten, wodurch Primär- und Sekundärspule auf die korrekte Position gezwungen werden. Ferner ist eine einseitige Verwendung eines Spulenarrays bekannt, das je nach Position der anderen Übertragungsseite optimal verschaltet wird. Des Weiteren sind bewegliche Spulen auf einer Übertragungsseite bekannt, die durch Messung der Kopplung zwischen beiden Spulen an die optimale Position geführt werden. Darüber hinaus sind besondere Spulengeometrien bekannt, die einen breiteren Feldverlauf und somit eine positionstolerantere Positionierung ermöglichen.

Die WO 2013/088238 A2 beschreibt die Erfassung von Fremdkörpern in einem System der induktiven Energieübertragung (IPT) und die Erfassung einer Ausrichtung oder relativen Position von magnetischen Leistungsübertragungsstrukturen in einem IPT-System.

Die oben beschriebenen Ansätze zur Positionierung von Spulen sind jedoch entweder sehr aufwendig zu implementieren oder nicht für die Positionierung von mobilen Spulen geeignet.

Der vorliegenden Erfindung liegt somit die Aufgabe zugrunde, ein Konzept zu schaffen, welches ein verbessertes Verhältnis zwischen Implementierungsaufwand und exakter Positionierung mobiler Spulen ermöglicht.

Diese Aufgabe wird durch die unabhängigen Patentansprüche gelöst. Weiterbildungen befinden sich in den abhängigen Patentansprüchen.

Ausführungsbeispiele der vorliegenden Erfindung schaffen eine Messvorrichtung mit einer Empfängerspulenanordnung und einer Auswerteeinrichtung. Die Empfängerspulenanordnung ist ausgebildet, um drei Magnetfeldkomponenten eines durch ein elektrisches Wechselstromsignal erzeugten magnetischen Feldes einer Leiterschleifenanordnung zu erfassen und um für jede der erfassten drei Magnetfeldkomponenten ein Magnetfeldkomponentensignal bereitzustellen. Die Auswerteeinrichtung ist ausgebildet, um die Magnetfeldkomponentensignale auszuwerten, um die für die Magnetfeldkomponentensignale zugeordnete Phasenbeziehung zu dem elektrischen Wechselstromsignal zu bestimmen, wobei die Phasenbeziehungen jeweils eine Grobpositionsinformation der Leiterschleifenanordnung relativ zu der Leiterschleifenanordnung aufweisen, und wobei die Auswerteeinrichtung ausgebildet ist, um eine resultierende Schnittmenge der Grobpositionsinformationen zu ermitteln, wobei die resultierende Schnittmenge eine Feinpositionsinformation der Empfängerspulenanordnung relativ zu der Leiterschleifenanordnung aufweist bzw. ergibt.

Gemäß dem Konzept der vorliegenden Erfindung kann eine Position einer Empfängerspulenanordnung relativ zu einer Leiterschleifenanordnung, die ein magnetisches Feld aussendet, ermittelt werden, indem entlang linear unabhängiger Richtungen drei Komponenten des magnetische Feldes erfasst werden, um Magnetfeldkomponentensignale zu erhalten, wobei Phasenbeziehung dieser Magnetfeldkomponentensignale zu einem elektrischen Wechselstromsignal, das das magnetische Feld erzeugt, Grobpositionsinformationen der Empfängerspulenanordnung relativ zu der Leiterschleifenanordnung aufweist. Dadurch, dass die Magnetfeldkomponenten entlang linear unabhängiger Richtungen erfasst werden, sind auch die Grobpositionsinformationen, die den Phasenbeziehungen zwischen den Magnetfeldkomponentensignalen und dem elektrischem Wechselstromsignal entnommen werden können, unabhängig, so dass durch Bilden der Schnittmenge der Grobpositionsinformationen eine Feinpositionsinformation der Empfängerspulenanordnung relativ zu der Leiterschleifenanordnung ermittelt werden kann.

Bei Ausführungsbeispielen kann die Messvorrichtung beispielsweise verwendet werden, um ein Fahrzeug auf einer Ladevorrichtung zum Laden eines elektrischen Energiespeichers des Fahrzeugs zu positionieren, wobei die Ladevorrichtung die Leiterschleifenanordnung aufweist.

Weitere Ausführungsbeispiele schaffen ein Messverfahren. Das Messverfahren umfasst einen Schritt des Erfassens von drei Magnetfeldkomponenten eines durch ein elektrisches Wechselstromsignal erzeugten magnetischen Feldes einer Leiterschleifenanordnung, wobei die Magnetfeldkomponenten entlang linear unabhängiger Richtungen erfasst werden; einen Schritt des Bereitstellens eines Magnetfeldkomponentensignals für jede der erfassten drei Magnetfeldkomponenten; und einen Schritt des Auswertens der Magnetfeldkomponentensignale, um für die Magnetfeldkomponentensignale zugeordnete Phasenbeziehungen zu dem elektrischen Wechselstromsignal zu bestimmen, wobei die Phasenbeziehungen jeweils eine Grobpositionsinformation der Empfängerspulenanordnung relativ zu der Senderingspulenanordnung aufweisen, wobei das Auswerten Ermitteln einer resultierenden Schnittmenge der Grobpositionsinformationen aufweist, wobei die resultierende Schnittmenge eine Feinpositionsinformation der Empfängerspulenanordnung relativ zu der Leiterschleifenanordnung aufweist/ergibt.

Weitere Ausführungsbeispiele schaffen eine Datenübertragungsvorrichtung mit einer Datensende- und/oder Datenempfangseinrichtung, einer Empfängerspulenanordnung, einer Auswerteeinrichtung und einer Steuervorrichtung. Die Empfängerspulenanordnung ist ausgebildet, um zumindest eine Magnetfeldkomponente eines durch ein elektrisches Wechselstromsignal erzeugten magnetischen Feldes einer Leiterschleifenanordnung einer weiteren Datenübertragungsvorrichtung zu erfassen und um für die erfasste Magnetfeldkomponente ein Magnetfeldkomponentensignal bereitzustellen. Die Auswerteeinrichtung ist ausgebildet, um das Magnetfeldkomponentensignal auszuwerten, um eine Phasenbeziehung zwischen dem Magnetfeldkomponentensignal und dem elektrischen Wechselstromsignal zu bestimmen, wobei die Phasenbeziehung eine Positionsinformation aufweist, die angibt, ob eine Projektion der Empfängerspulenanordnung senkrecht zu einer Leiterschleifenfläche innerhalb der Leiterschleifenfläche liegt, wobei die Leiterschleifenfläche in einer Ebene liegt, die durch die Leiterschleifenanordnung aufgespannt wird, und wobei die Leiterschleifenfläche durch die Leiterschleifenanordnung begrenzt wird. Die Steuervorrichtung ist ausgebildet, um eine Datenübertragung der Datensende- und/oder Datenempfangseinrichtung nur dann freizugeben, wenn die Projektion der Empfängerspulenanordnung senkrecht zur Leiterschleifenfläche innerhalb oder außerhalb der Leiterschleifenfläche liegt.

Weitere Ausführungsbeispiele schaffen ein Verfahren zur Datenübertragung zwischen einer Datenübertragungsvorrichtung und einer weiteren Datenübertragungsvorrichtung. Das Verfahren umfasst Erfassen einer Magnetfeldkomponente eines durch ein elektrisches Wechselstromsignal erzeugten magnetischen Feldes einer Leiterschleifenanordnung; Bereitstellen eines Magnetfeldkomponentensignals für die erfasste Magnetfeldkomponente; Auswerten des Magnetfeldkomponentensignals, um eine Phasenbeziehung zwischen dem Magnetfeldkomponentensignal und dem elektrischen Wechselstromsignal zu bestimmen, wobei die Phasenbeziehungen eine Positionsinformation aufweisen, die angibt, ob eine Projektion der Empfängerspulenanordnung senkrecht zu einer Leiterschleifenfläche innerhalb der Leiterschleifenfläche liegt, wobei die Leiterschleifenfläche in einer Ebene liegt, die durch die Leiterschleifenanordnung aufgespannt wird, und wobei die Leiterschleifenfläche durch die Leiterschleifenanordnung begrenzt wird; und Freigeben der Datenübertragung zwischen der Datenübertragungsvorrichtung und der weiteren Datenübertragungsvorrichtung, sofern die Projektion der Empfängerspulenanordnung senkrecht zu der Leiterschleifenfläche innerhalb oder außerhalb der Leiterschleifenfläche liegt.

Ausführungsbeispiele der vorliegenden Erfindung werden Bezug nehmend auf die beiliegenden Zeichnungen näher erläutert. Es zeigen:
- Fig. 1a: ein schematisches Blockschaltbild einer Messvorrichtung gemäß einem Ausführungsbeispiel der vorliegenden Erfindung;
- Fig. 1b: eine schematische Ansicht eines Fahrzeugs bei korrekter Positionierung und nicht korrekter Positionierung auf einer Ladevorrichtung mit einer Leiterschleifenanordnung zum Laden des Fahrzeugs;
- Fig. 2: eine schematische Ansicht einer Leiterschleifenanordnung und einer Empfängerspulenanordnung mit einer z-Spule sowie in einem Diagramm einen Verlauf des Magnetfeldkomponentensignals der z-Spule, wenn die Empfängerspulenanordnung mit der z-Spule entlang der in Fig. 2 gezeigten Bewegungsrichtung einen ersten Leiterbereich der Leiterschleifenanordnung überquert;

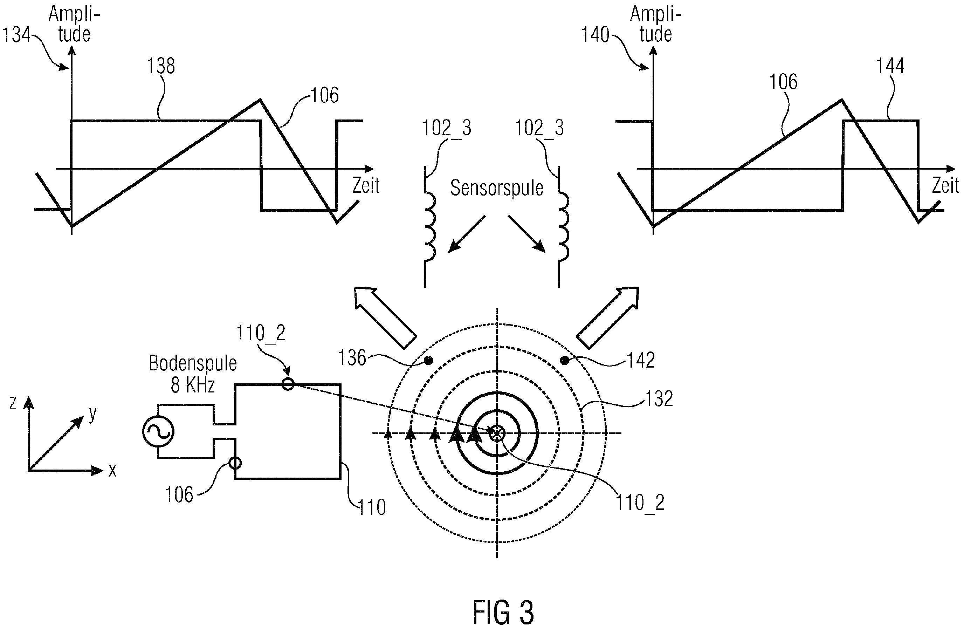

- Fig. 3: eine schematische Ansicht der Leiterschleifenanordnung, eines Querschnitts des stromdurchflossenen zweiten Leiterbereichs der Leiterschleifenanordnung zusammen mit Feldlinien des magnetischen Feldes, das durch ein unsymmetrisches Wechselstromsignal erzeugt wird, sowie in einem ersten Diagramm einen Verlauf einer an einer ersten Position der Empfängerspulenanordnung in die zSpule induzierte Spannung aufgetragen über die Zeit und in einem zweiten Diagramm einen Verlauf einer an einer zweiten Position der Empfängerspulenanordnung in die z-Spule induzierte Spannung aufgetragen über die Zeit;
- Fig. 4a: eine schematische Ansicht der Leiterschleifenanordnung und der z-Spule der Empfängerspulenanordnung;
- Fig. 4b: eine schematische Ansicht der Leiterschleifenanordnung, der x-Spule der Empfängerspulenanordnung, Querschnitte des ersten und zweiten stromdurchflossenen Leiterbereichs der Leiterschleifenanordnung sowie Feldlinien des magnetischen Feldes, das durch den Stromfluss durch den ersten Leiterbereich und den zweiten Leiterbereich hervorgerufen wird;
- Fig. 5a: eine schematischen Ansicht von drei x-Grobbereichen einer Positionierungsfläche, die die Messeinrichtung basierend auf dem Magnetfeldkomponentensignal der x-Spule ermitteln kann;
- Fig. 5b: eine schematischen Ansicht von drei y-Grobbereichen einer Positionierungsfläche, die die Messeinrichtung basierend auf dem Magnetfeldkomponentensignal der y-Spule ermitteln kann;
- Fig. 5c: eine schematischen Ansicht von drei z-Grobbereichen einer Positionierungsfläche, die die Messeinrichtung basierend auf dem Magnetfeldkomponentensignal der z-Spule ermitteln kann;
- Fig. 6a: in einer schematischen Ansicht Grobbereiche, die von den Grobpositionsinformationen der Phasenbeziehungen der Magnetfeldkomponentensignale der x-Spule, y-Spule und z-Spule angezeigt werden, sowie ein Feinbereich, der aus der Schnittmenge der angezeigten Grobbereiche resultiert;
- Fig. 6b: in einer schematischen Ansicht Grobbereiche, die von den Grobpositionsinformationen der Phasenbeziehungen der Magnetfeldkomponentensignale der x-Spule, y-Spule und z-Spule angezeigt werden, sowie ein Feinbereich, der aus der Schnittmenge der angezeigten Grobbereiche resultiert;
- Fig. 6c: in einer schematischen Ansicht Grobbereiche, die von den Grobpositionsinformationen der Phasenbeziehungen der Magnetfeldkomponentensignale der x-Spule, y-Spule und z-Spule angezeigt werden, sowie ein Feinbereich, der aus der Schnittmenge der angezeigten Grobbereiche resultiert;
- Fig. 7: eine schematische Ansicht der Leiterschleifenanordnung sowie der Positionierungsfläche, die durch einen Kreis begrenzt wird und der Leiterschleifenanordnung zugeordnet ist;
- Fig. 8a: eine schematische Ansicht einer Leiterstreifenanordnung und einer Messvorrichtung mit drei Empfängerspulenanordnungen;
- Fig. 8b: eine schematische Ansicht einer Leiterstreifenanordnung und einer Messvorrichtung mit drei Empfängerspulenanordnungen;
- Fig. 9: ein Flussdiagramm eines Messverfahrens gemäß einem Ausführungsbeispiel der vorliegenden Erfindung;
- Fig. 10: ein schematisches Blockschaltbild einer Datenübertragungsvorrichtung gemäß einem Ausführungsbeispiel der vorliegenden Erfindung;
- Fig. 11: ein schematisches Blockschaltbild einer Leiterschleifenanordnung sowie einer korrekt positionierten z-Spule und einer nicht korrekt positionierten z-Spule; und
- Fig. 12: ein Flussdiagramm eines Verfahrens zur Datenübertragung zwischen einer Datenübertragungsvorrichtung und einer weiteren Datenübertragungsvorrichtung.

In der nachfolgenden Beschreibung von Ausführungsbeispielen der vorliegenden Erfindung werden gleiche oder gleichwirkende Elemente mit den gleichen Bezugszeichen versehen, so dass deren Beschreibung untereinander austauschbar ist.

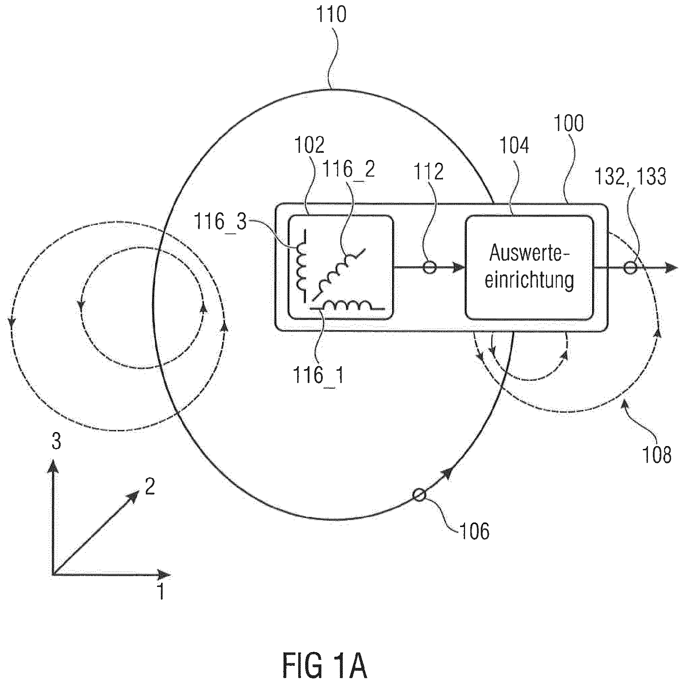

Fig. 1a zeigt ein schematisches Blockschaltbild einer Messvorrichtung 100 gemäß einem Ausführungsbeispiel der vorliegenden Erfindung. Die Messvorrichtung 100 weist eine Empfängerspulenanordnung 102 und eine Auswerteeinrichtung 104 auf.

Die Empfängerspulenanordnung 102 ist ausgebildet, um drei Magnetfeldkomponenten eines durch ein elektrisches Wechselstromsignal 106 erzeugten magnetischen Feldes 108 einer Leiterschleifenanordnung 110 zu erfassen und um für jede der erfassten drei Magnetfeldkomponenten ein Magnetfeldkomponentensignal 112 bereitzustellen.

Die Auswerteeinrichtung 104 ist ausgebildet, um die Magnetfeldkomponentensignale 112 auszuwerten, um für die Magnetfeldkomponentensignale 112 zugeordnete Phasenbeziehungen zu dem elektrischen Wechselstromsignal 106 zu bestimmen, wobei die Phasenbeziehungen jeweils eine Grobpositionsinformation der Empfängerspulenanordnung 102 relativ zu der Leiterschleifenanordnung 110 aufweisen, und wobei die Auswerteeinrichtung 104 ausgebildet ist, um eine resultierende Schnittmenge der Grobpositionsinformationen zu ermitteln, wobei die resultierende Schnittmenge eine Feinpositionsinformation der Empfängerspulenanordnung 102 relativ zu der Leiterschleifenanordnung 110 aufweist bzw. ergibt.

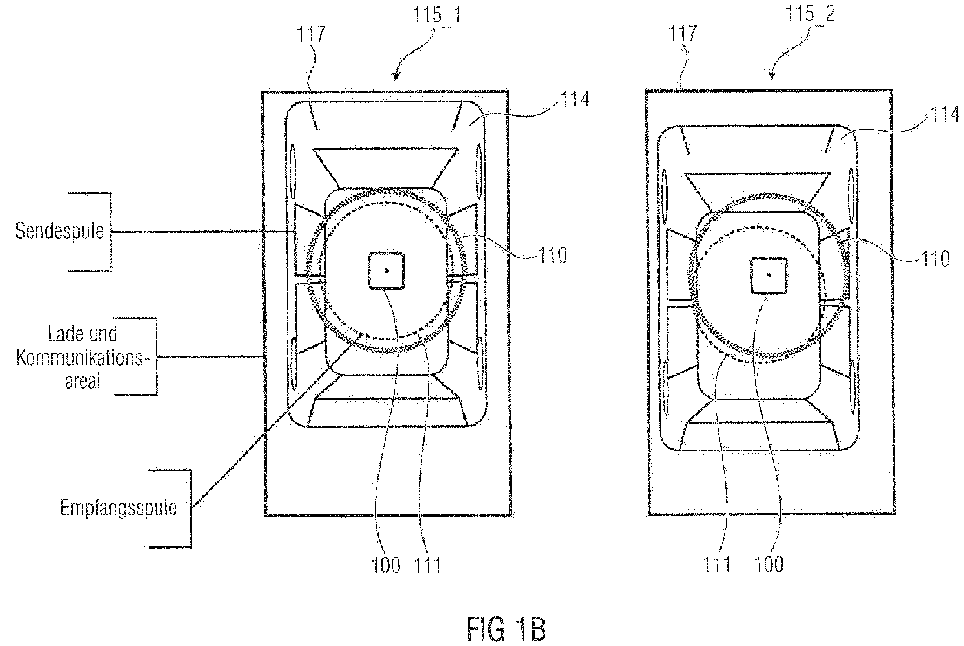

Die Empfängerspulenanordnung 102 ist dabei ausgebildet, um die drei Magnetfeldkomponenten entlang linear unabhängiger Richtungen zu erfassen. Fig. 1 zeigt beispielhaft ein Koordinatensystem mit drei linear unabhängigen Richtungen, entlang derer die Empfängerspulenanordnung 102 die drei Magnetfeldkomponenten des magnetischen Feldes 108 erfassen kann.

Bei Ausführungsbeispielen kann die Empfängerspulenanordnung 102 drei Spulen 116_1 bis 116_3 aufweisen, die relativ zueinander angeordnet sind, um die drei Magnetfeldkomponenten des erzeugten magnetischen Feldes 108 der Leiterschleifenanordnung 110 zu erfassen.

Jede der drei Spulen 116_1 bis 116_3 kann dabei eines der drei Magnetfeldkomponentensignale 112 bereitstellen. Beispielsweise kann eine erste Spule 116_1 der drei Spulen 116_1 bis 116_3 ein erstes Magnetfeldkomponentensignal der drei Magnetfeldkomponentensignale bereitstellen, während eine zweite Spule 116_2 der drei Spulen 116_1 bis 116_3 ein zweites Magnetfeldkomponentensignal der drei Magnetfeldkomponentensignale bereitstellen kann, und während eine dritte Spule 116_3 der drei Spulen 116_1 bis 116_3 ein drittes Magnetfeldkomponentensignal der drei Magnetfeldkomponentensignale bereitstellen kann.

Bei Ausführungsbeispielen kann die Empfängerspulenanordnung 102 ausgebildet sein, um die die drei Magnetfeldkomponenten entlang orthogonaler Richtungen zu erfassen. Beispielsweise kann in diesem Fall das in Fig. 1 gezeigte Koordinatensystem ein kartesisches (x-y-z-Koordinatensystem) sein, wobei die erste Spule 116_1 der drei Spulen 116_1 bis 116_3 der Empfängerspulenanordnung 102 parallel zu einer x-Achse des kartesischen Koordinatensystems angeordnet sein kann, wobei die zweite Spule 116_2 der drei Spulen 116_1 bis 116_3 der Empfängerspulenanordnung 102 parallel zu einer y-Achse des kartesischen Koordinatensystems angeordnet sein kann, und wobei die dritte Spule 116_3 der drei Spulen der Empfängerspulenanordnung 102 parallel zu einer z-Achse des kartesischen Koordinatensystems angeordnet sein kann.

In der nachfolgenden Beschreibung wird vereinfacht davon ausgegangen, dass die Empfängerspulenanordnung 102 ausgebildet ist, um drei Magnetfeldkomponenten entlang orthogonaler Richtung, d.h. parallel zu x-y-z-Achsen des kartesischen Koordinatensystems zu erfassen. Es sei jedoch darauf hingewiesen, dass die Erfindung nicht auf solche Ausführungsbespiele beschränkt ist. Vielmehr kann die Empfängerspulenanordnung 102 ausgebildet sein, um Magnetfeldkomponenten des magnetischen Feldes 108 der Leiterschleifenanordnung 110 entlang linear unabhängiger Richtungen zu erfassen.

Ferner sei darauf hingewiesen, dass, obwohl in Fig. 1 eine kreisförmige Leiterschleifenanordnung 110 gezeigt ist, die Erfindung nicht auf solche Ausführungsbeispiele beschränkt ist. Vielmehr kann die Leiterschleifenanordnung 110 eine beliebige Form, wie z.B. eine rechteckige, quadratische, dreieckige, vieleckige oder kreisförmige Form aufweisen.

Bei der Übertragung von Daten und oder Energie mittels verkoppelter Spulen (Leiterschleifenanordnungen) ist die exakte Positionierung der an der Übertragung beteiligten Spulen zueinander entscheidend für eine effiziente und fehlerfreie Übertragung. Durch eine spezielle Signalform, die von einer Spule bzw. (Sende)Leiterschleifenanordnung 110 ausgesendet wird und von einer weiteren Spule bzw. (Empfangs) Leiterschleifenanordnung empfangen wird, kann anhand der empfangenen Signale die Orientierung der beiden Spulen zueinander ermittelt werden und auch der Versatz der Spulen zueinander festgestellt werden. Mit diesen Informationen kann die Ausrichtung der Spulen zueinander korrigiert und so die Übertragung optimiert werden. Zudem kann bei einem Kommunikationssystem die Lage der beteiligten Spulen zueinander überprüft werden.

Die Messvorrichtung 100 ermöglicht es somit bei Daten- und/oder Energieübertragungssystemen mit Spulen (Leiterschleifenanordnungen; Sendeleiterschleifenanordnung und Empfangsleiterschleifenanordnung), Informationen über die Orientierung und Lage der beteiligten Spulen zueinander zu gewinnen. Mit diesen Informationen ist eine Optimierung der Anordnung bei Fehlpositionierung möglich um höhere Übertragungseffizienz zu erreichen. Dadurch ist es auch möglich sicherzustellen, dass die beteiligten Spulen wie gewünscht zueinander positioniert sind. Dies ist vor allem dann interessant wenn sich mehrere Systeme in unmittelbarer Nachbarschaft befinden und es sonst, z.B. aufgrund von Überreichweiten zu falschen Zuordnungen von Kommunikationspartnern kommen kann.

Fig. 1b zeigt schematische Ansicht eines Fahrzeugs 114 bei korrekter Positionierung 115_1 und nicht korrekter Positionierung 115_2 auf einer Ladevorrichtung 117 mit einer Leiterschleifenanordnung 110 zum Laden des Fahrzeugs. Die Leiterschleifenanordnung 110 (Sendeleiterschleifenanordnung) kann beispielsweise in einem Boden der Ladevorrichtung bzw. des Ladeareals 117 eingelassen bzw. integriert sein. Das Fahrzeug 114 kann ebenfalls eine Leiterschleifenanordnung (Empfangsleiterschleifenanordnung) 111 aufweisen, wobei die Energieübertragung von dem Ladeareal zu dem Fahrzeug 114 über die Leiterschleifenanordnungen 110 und 111 erfolgen kann. Wenn die Leiterschleifenanordnungen 110 und 111 nicht korrekt positioniert (115_2) sind, d.h. sich nicht vollständig überdecken, ist die Energieübertragung und damit ein Laden eines elektrischen Energiespeichers des Fahrzeugs 114 bedingt durch die nicht optimale Kopplung zwischen den Leiterschleifenanordnungen 110 und 111 reduziert bis nicht möglich.

Das in Fig. 1a gezeigte Messsystem 100 kann zum Positionieren des Fahrzeugs auf der Ladevorrichtung 117 verwendet werden. Hierzu kann die Empfängerspulenanordnung 102 des Messsystems 100 beispielsweise an einer vorgegebenen Position relativ zu der Empfängerspulenanordnung 111 oder an einem geometrischen Schwerpunkt bzw. Mittelpunkt der Empfängerspulenanordnung 111 positioniert werden. Anhand der von der Auswerteinrichtung ermittelten Feinpositionsinformation kann nun bestimmt werden, ob das Fahrzeug korrekt positioniert 115_1 oder nicht korrekt positioniert 115_2 ist.

Ausführungsbeispiele lösen die Aufgabe die Position einer mobilen Leiterschleifenanordnung bzw. mobilen Spule (z.B. Ladespule in einem Elektroauto) 111 als Teil eines induktiv gekoppelten Ladesystems in Bezug zur stationären Primärspule 110 zu orten und daraus Steuerinformationen für die Bewegung der mobilen Spule 111 (Fahrzeug) abzuleiten, um die mobile Spule 111 in die für das Laden und/oder Kommunizieren optimale Position zu manövrieren. Fig. 1b zeigt ein solches System mit einer Sendespule 110 und einer auf einem mobilen Fahrzeug 114 angebrachten Empfangsspule 111 (gegenüber dazu auf einer parallelen Ebene), einmal optimal (links) 115_1 und nicht optimal (rechts) 115_2 zueinander positioniert. Falls es sich nicht um ein induktives Ladesystem handelt, sondern z.B. um ein kontaktbehaftetes Ladesystem, so kann trotzdem über ein entsprechendes Spulensystem eine Steuerinformation für ein automatisches Kopplungssystem gewonnen werden. Allgemein können Daten zur Positionierung solcher Systeme auf kurze Distanzen (max. wenige Meter) gewonnen werden.

Ausführungsbeispiele ermöglichen es festzustellen, wo sich eine Empfängerspule in Bezug auf die Sendespule 110 befindet. Wenn mehrere Empfängerspulen vorhanden sind, so kann aus einer bekannten Lage dieser Empfängerspulen zueinander und den von ihnen empfangenen Signalen die Orientierung des Empfängersystems zu einer Sendespule 110 bestimmt werden. Mit den gewonnenen Signalen kann so die Positionierung des Übertragungssystems zueinander optimiert werden. Da die ermittelten Werte sich unmittelbar in Positionsangaben umsetzen lassen ist diese Methode exakter als eine Positionskontrolle auf Grundlage von Signalstärkemessungen da zusätzliche Information zu Lage ermittelt werden.

Die Lösung setzt sich aus zwei Teilaspekten zusammen. Einmal aus dem Auswerten des Phasensprungs in der z-Komponente einer Sensorspule der Empfängerspulenanordnung beim Überqueren einer Sendespule (Bodenspule) 110 in Kombination mit unsymmetrischen Sendesignalen 106 zur eindeutigen Unterscheidung zwischen Innen und Außen der Sendespule 110. Dieses Prinzip wird durch die Verwendung einer 3D Empfangsspule 102 erweitert. Zum anderen kann durch das Auswerten der Empfangsfeldstärken bei einer 3D Empfangsspule 102 ein Richtungsvektor zur Feldquelle (Bodenspule 110) ermittelt werden. Werden mehrere Vektoren solcher 3D Empfangsspulen 102 kombiniert so lassen sich daraus Positionierungsangaben generieren.

Im Folgenden wird die Funktionsweise der in Fig. 1a gezeigten Messvorrichtung im Detail beschrieben.

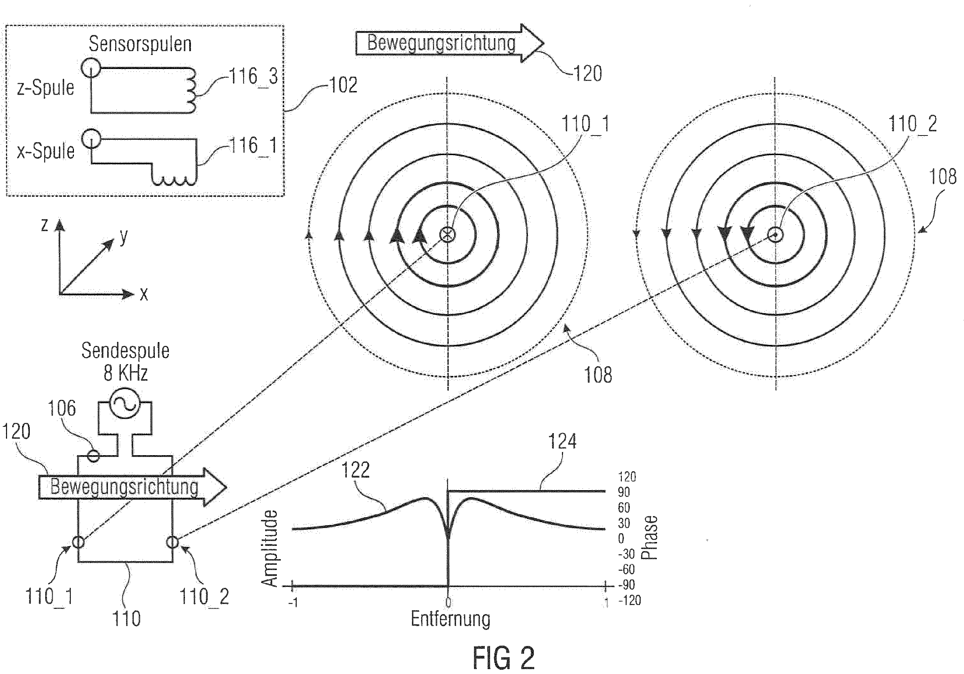

Wird durch eine Leiterschleifenanordnung 110 (z.B. eine Sendespule oder erste Spule) ein elektrisches Wechselsignal, z.B. ein sinusförmiges oder dreieckförmiges Stromsignal 106, geleitet, so entsteht im Nahfeld um diese Leiterschleifenanordnung 110 ein magnetisches Wechselfeld 108, das mit einer Empfängerleitschleifenanordnung (z.B. eine Empfängerspule oder zweiten Spule) 111 empfangen werden kann. Die aktuelle Position kann durch die Analyse des empfangenen Signals (Magnetfeldkomponentensignal) ermittelt werden, da sich beim Überfahren oder Überqueren der Leiterschleifenanordnung 110 (Sendespule) die Phase des empfangenen Signals einen Sprung aufweist, d.h. sich um 180° dreht, wie dies in Fig. 2 gezeigt ist.

Fig. 2 zeigt eine schematische Ansicht einer Leiterschleifenanordnung 110 und einer Empfängerspulenanordnung 102 mit einer z-Spule 116_3 sowie in einem Diagramm einen Verlauf des Magnetfeldkomponentensignals der z-Spule 116_3, wenn die Empfängerspulenanordnung 102 mit der z-Spule 116_3 entlang der in Fig. 2 gezeigten Bewegungsrichtung 120 einen ersten Leiterbereich 110_1 der Leiterschleifenanordnung 110 überquert. In dem Diagramm beschreibt die Ordinate sowohl Amplitude 122 als auch Phase 124 des Magnetfeldkomponentensignals der z-Spule 116_3, während die Abszisse die normierte Entfernung in x-Richtung der Empfängerspulenanordnung 102 zu dem Leiterbereich 110_1 der Leiterschleifenanordnung 110 beschreibt. In Fig. 2 sind ferner Schnittansichten des ersten Leiterbereichs 110_1 der Leiterschleifenanordnung 110 sowie eines zweiten Leiterbereichs 110_2 der Leiterschleifenanordnung 110 zusammen mit Feldlinien 108 des magnetischen Feldes, welches durch einen Stromfluss durch die ersten und zweiten Leiterbereiche 110_1 und 110_2 erzeugt wird, gezeigt.

Aus dem Diagramm in Fig. 2 folgt, dass das Magnetfeldkomponentensignal der z-Spule 116_3 einen Phasensprung in dem Moment aufweist, in dem die z-Spule 116_3 den ersten Leiterbereich 110_1 der Leiterschleifenanordnung 110 überquert. Im Detail weist das Magnetfeldkomponentensignal der z-Spule 116_3 den Phasensprung auf, wenn eine Projektion der Spulenfläche (z.B. aktiven Fläche bzw. Sensorfläche) der z-Spule 116_3 orthogonal auf dem ersten Leiterschleifenbereich 110_1 der Leiterschleifenanordnung 110 steht.

Wenn die Empfängerspulenanordnung 102 weiter entlang der Bewegungsrichtung 120 bewegt wird, weist das Magnetfeldkomponentensignal der z-Spule 116_3 einen weiteren Phasensprung auf, wenn die z-Spule 116_3 den zweiten Leiterbereich 110_2 der Leiterschleifenanordnung 110 überquert.

Fig. 3 zeigt eine schematische Ansicht der Leiterschleifenanordnung 110, eines Querschnitts des stromdurchflossenen zweiten Leiterbereichs 110_2 der Leiterschleifenanordnung 110 zusammen mit Feldlinien 108 des magnetischen Feldes, das durch den stromdurchflossenen Leiterbereich 110_2 der Leiterschleifenanordnung 110 erzeugt wird, sowie in einem ersten Diagramm 134 einen Verlauf einer an einer ersten Position 136 der Empfängerspulenanordnung 102 in die z-Spule 116_3 induzierte Spannung 138 aufgetragen über die Zeit und in einem zweiten Diagramm 140 einen Verlauf einer an einer zweiten Position 142 der Empfängerspulenanordnung 102 in die z-Spule 116_3 induzierte Spannung 144 aufgetragen über die Zeit. Ferner ist in dem ersten Diagramm 134 und dem zweiten Diagramm 140 ein Verlauf des Stromes 106 durch den zweiten Leiterbereich 110_2 der Leiterschleifenanordnung 110 eingezeichnet.

Wie in Fig. 3 zu erkennen ist, wird je nach Position 136 und 142 der z-Spule 116_3, die in z-Richtung orientiert ist, relativ zu dem stromdurchflossenen Leiterbereich 110_2 der Leiterschleifenanordnung 110 eine andere charakteristische Spannung 138 und 144 in die z-Spule 1162_3 induziert, wenn z.B. ein unsymmetrisches Signal (Wechselstromsignal) 106, wie z.B. ein Dreieckssignal, verwendet wird. Eine mögliche Auswertemethode in einer Schaltung ist die Zeitmessung zwischen steigenden und fallenden Flanken der in Fig. 3 gezeigten Spannungsverläufe 138 und 144 der in die z-Spule 116_3 induzierten Spannungen.

Weiterhin ist es möglich, Signale über einen Schnitt-Trigger zu führen und anschließend durch eine Integration des induzierten Spulensignals (Magnetfeldkomponentensignals) und einem Vergleich mit einem Mittelwert des empfangenen Signals eine eindeutige Zuordnung des Spulensignals zu einer Leiterseite zu treffen, da sich aufgrund des Phasensprungs auf der einen Seite des Leiterbereichs 110_2 (z.B. erste Position 136) ein kleinerer Integrationswert als auf der anderen Seite des Leiterbereichs 110_2 (z.B. zweite Position 142) ergibt.

Die Messvorrichtung 100 kann somit zusätzlich die Amplitude des Magnetfeldkomponentensignals (Empfangssignals) 112 auswerten. Bei einer unsymmetrischen Signalform des durch die Leiterschleifenanordnung 110 (Bodenspule) laufenden Stroms 106 kann diese Positionsinformation ohne Kenntnis der vorherigen Position der Empfängerspulenanordnung (Sensorspule) 102 allein anhand der induzierten Spannung ermittelt werden. Die entsprechenden Signale sind in Fig. 3 dargestellt.

Im Gegensatz zu Ausführungsbeispielen der vorliegenden Erfindung, lassen sich mit dem aus der DE 10 2013 214 238 bekannten System bisher zwei Zustände bestimmen, und zwar "innen/außen" in Bezug auf die Leiterschleife. Der Aufbau des dort beschriebenen Systems erlaubt es aber auch einen dritten Zustand zu erfassen, und zwar "über der Grenze". Dieser Zustand ergibt sich als Grenzzustand beim Überfahren bzw. Überqueren von innen nach außen oder umgekehrt, da sich dort beide Seiten in ihren Signalanteilen der z-Komponente gegenseitig aufheben. Um dieses Zustand eindeutig zu erkennen, müssen dort allerdings entweder mehrere orthogonale Spulen zum Einsatz kommen oder die Signalstärke zusätzlich zur Phase abgefragt werden. Das System geht dabei davon aus, dass weder der Stromfluss durch die Sendespule noch die Sensorspule gedreht wird, da dadurch die Zustandszuordnung geändert würde. Aufseiten der Sensorspule kann durch zusätzliche Lagesensoren dies verhindert oder entsprechend in der Auswertung berücksichtigt werden.

Bei Ausführungsbeispielen wird hingegen die Kombination der im Folgenden beschriebenen technische Effekte genutzt.

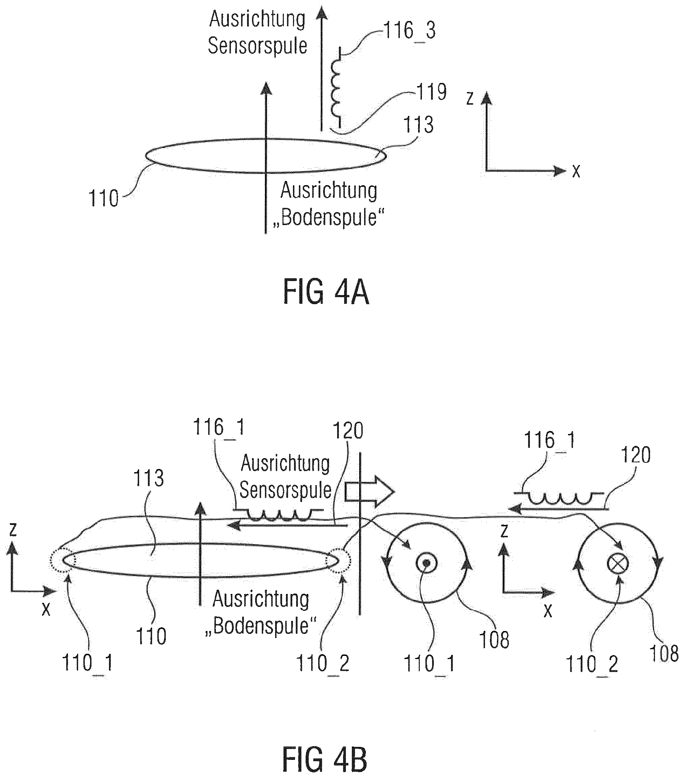

Fig. 4a zeigt eine schematische Ansicht der Leiterschleifenanordnung (Bodenspule) 110 und der z-Spule 116_3 der Empfängerspulenanordnung 102. Wie in Fig. 4a zu erkennen ist, sind die Leiterschleifenfläche 113 der Leiterschleifenanordnung 110 und die Spulenfläche 119 der z-Spule 116_3 parallel zueinander ausgerichtet. Die Leiterschleifenfläche 113 der Leiterschleifenanordnung 110 liegt dabei in einer Ebene, die durch die Leiterschleifenanordnung 110 aufgespannt wird und die durch die Leiterschleifenanordnung 110 begrenzt wird. Die Spulenfläche 119 der z-Spule 116_3 liegt dabei in einer Ebene, die durch die z-Spule 116_3 aufgespannt wird und durch die z-Spule 116_3 begrenzt wird. Mit anderen Worten, die Leiterschleifenanordnung 110 und die z-Spule 116_3 sind entlang Richtungen angeordnet, die parallel zu der z-Achse verlaufen.

Fig. 4b zeigt eine schematische Ansicht der Leiterschleifenanordnung 110, der x-Spule 116_1 der Empfängerspulenanordnung 102, Querschnitte des ersten und zweiten stromdurchflossenen Leiterbereichs 110_1 der Leiterschleifenanordnung sowie Feldlinien 108 des magnetischen Feldes, das durch den Stromfluss durch den ersten Leiterbereich 110_1 und den zweiten Leiterbereich 110_2 hervorgerufen wird. Mit anderen Worten, Fig. 4b zeigt auf der linken Seite die neue senkrechte Ausrichtung (x-, y-Ausrichtung) und rechts eine Vergrößerung. Dabei besteht die Möglichkeit zur Seitenzuordnung durch den Phasensprung der Magnetfeldkomponentensignale der x-Spule 116_1 und der y-Spule 116_2. Für die folgenden Erläuterungen wird beispielhaft davon ausgegangen, dass die x-Spule 116_1 der Empfängerspulenanordnung 102 entlang einer Bewegungsrichtung 120 bewegt wird, die antiparallel zu der x-Achse verläuft.

Aus Fig. 4a in Kombination mit Fig. 2 folgt also, dass, wenn die beiden Spulenflächen von Bodenspule (Sender) 110 und Sensorspule (Empfänger, z.B. z-Spule 116_3) parallel zueinander angeordnet sind, der Phasensprung beim Bewegen der Empfangsspule (z.B. z-Spule 116_3) von außerhalb nach innerhalb oder von innerhalb nach außerhalb der Leiterschieifenanordnung (Sendespule) 110 auftritt.

Wenn die Empfängerspulenfläche hingegen orthogonal zu der Leiterschleifenfläche (Sendespulenfläche) angeordnet ist, wie dies beispielsweise bei der x-Spule 116_1 der Fall ist und in Fig. 4b gezeigt ist, dann tritt der Phasensprung beim Überfahren der Leiterschleifenanordnung (Sendespule) 110 dann auf, wenn die Empfangsspule (z.B. x-Spule 116_1) den Einflussbereich der einen Seite (z.B. rechts vom geometrischen Mittelpunkt bzw. Schwerpunkt der Leiterschleifenanordnung bzw. Bodenspule 110) der Leiterschleifenanordnung (Sendespule) 110 verlässt und in den Einflussbereich der anderen Seite (z.B. links vom geometrischen Mittelpunkt bzw. Schwerpunkt der Leiterschleifenanordnung bzw. Bodenspule 110) eintritt. Bei dieser Bewegung kann auch das Überfahren bzw. Überqueren der Mitte (geometrischer Mittelpunkt bzw. Schwerpunkt der Leiterschleifenanordnung 110) erkannt werden, da sich hier die Signale der beiden Seiten gegenseitig aufheben.

Kombiniert man nun diese beiden Überlegungen und fügt noch eine dritte Spule (z.B. y-Spule 116_2) hinzu, die senkrecht zu den anderen beiden steht (3D-Spule), ergibt sich eine Anordnung, die in x-, y- und z-Richtung jeweils drei Zustände erkennt, was z.B. bei einer kreisförmigen Leiterschleifenanordnung (Bodenspule) 110 eine Unterteilung in theoretisch 27, praktisch 26 verschiedene Bereiche zulässt, wie im Folgenden erläutert wird.

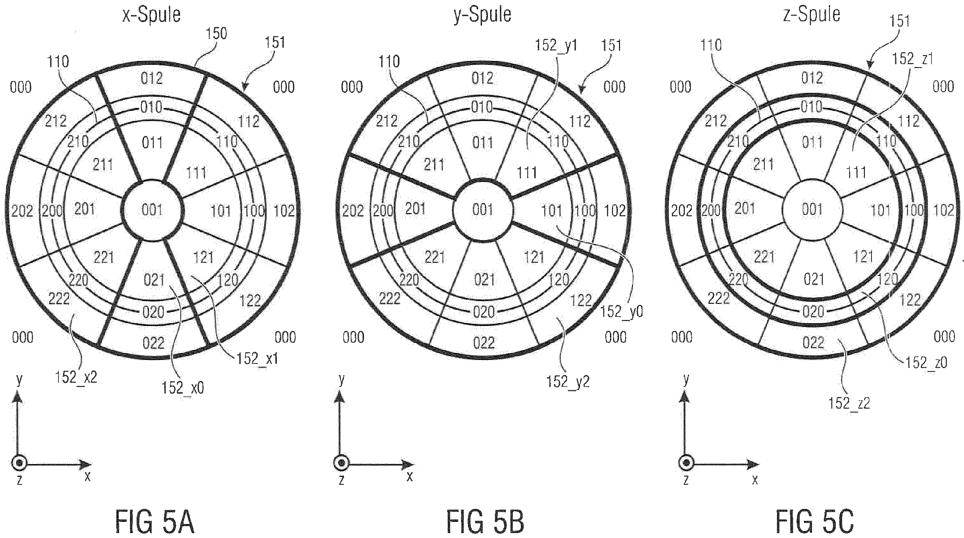

Fig. 5a zeigt eine schematischen Ansicht von drei x-Grobbereichen 152_x0 bis 152_x2 einer Positionierungsfläche 151, die die Messeinrichtung 100 basierend auf dem Magnetfeldkomponentensignal der x-Spule 116_1 ermitteln kann.

Die Positionierungsfläche 151 (begrenzt durch den Ring 150 in Fig. 5a), die der Leiterschleifenanordnung 110 zugeordnet sein kann, kann parallel zu einer Leiterschleifenebene verlaufen, die durch die Leiterschleifenanordnung 110 aufgespannt wird. Die Positionierungsfläche kann dabei gleich groß oder größer sein als die Leiterschleifenfläche 113, die in der Leiterschleifenebene liegt und durch die Leiterschleifenanordnung 110 begrenzt wird.

Bei Ausführungsbeispielen kann die Auswerteeinrichtung 104 ausgebildet sein, um das Magnetfeldkomponentensignal der x-Spule 116_1 auszuwerten, um eine Phasenbeziehung zwischen dem Magnetfeldkomponentensignal der x-Spule 116_1 und dem elektrischen Wechselstromsignal zu bestimmen. Die Phasenbeziehung kann dabei eine Grobpositionsinformation der x-Spule 116_1 relativ zu der Leiterschleifenanordnung 110 aufweisen, wie im Folgenden erläutert wird.

Wenn die x-Spule 116_1 die Leiterschleifenanordnung 110 in x-Richtung vollständig überquert, dann weist die Phasenbeziehung zwischen dem Magnetfeldkomponentensignal der x-Spule 116_1 und dem elektrischen Wechselstromsignal 106 einen Phasensprung dann auf, wenn die x-Spule 116_1 den geometrischen Mittelpunkt bzw. Schwerpunkt der Leiterschleifenanordnung 110 überquert. Vor dem Auftreten des Phasensprungs weist die Phasenbeziehung also eine erste Phase auf, wohingegen nach dem Auftreten des Phasensprungs die Phasenbeziehung eine zweite Phase aufweist.

Die Phasenbeziehung zwischen dem Magnetfeldkomponentensignal der x-Spule 116_1 und dem elektrischen Wechselstromsignal 106 kann demnach in Abhängigkeit von der Position der x-Spule 116_1 relativ zu der Leiterschleifenanordnung 110 drei verschiedene Zustände einnehmen, und zwar einen Phasensprung (Zustand 0), eine erste Phase (Zustand 1), z.B. - 90°, und eine zweite Phase (Zustand 2), z.B. +90°. Die Phasenbeziehung weist somit eine Grobpositionsinformation auf, die in Abhängigkeit von der aktuellen Phasenbeziehung zwischen dem Magnetfeldkomponentensignal der x-Spule 116_1 und dem elektrischen Wechselstromsignal 106 einen von drei möglichen x-Grobbereichen 152_x1 bis 152_x3 anzeigt, wobei sich die drei möglichen x-Grobbereiche 152_x1 bis 152_x3 nicht überlappen bzw. überschneiden.

Analog hierzu zeigt Fig. 5b eine schematischen Ansicht von drei y-Grobbereichen 152_y0 bis 152_y2 der Positionierungsfläche 151, die die Messeinrichtung 100 basierend auf dem Magnetfeldkomponentensignal der y-Spule 116_2 ermitteln kann, während Fig. 5c eine schematischen Ansicht von drei z-Grobbereichen 152_z0 bis 152_z2 der Positionierungsfläche 151 zeigt, die die Messeinrichtung 100 basierend auf dem Magnetfeldkomponentensignal der z-Spule 116_3 ermitteln kann.

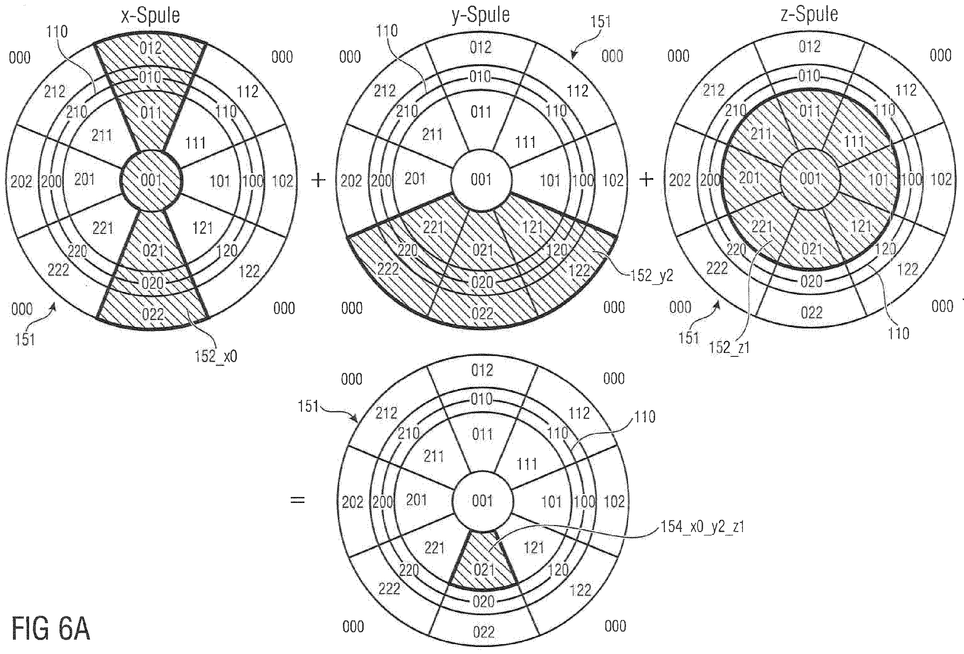

Fig. 6a zeigt in einer schematischen Ansicht Grobbereiche, die von den Grobpositionsinformationen der Phasenbeziehungen der Magnetfeldkomponentensignale der x-Spule 116_1, y-Spule 116_2 und z-Spule 116_3 angezeigt werden, sowie ein Feinbereich, der aus der Schnittmenge der angezeigten Grobbereiche resultiert.

In Fig. 6a weist die Phasenbeziehung zwischen den Magnetfeldkomponentensignal der x-Spule 116_1 und dem elektrischen Wechselstromsignal 106 einen Phasensprung (Zustand 0) auf, so dass die erste Grobpositionsinformation den ersten x-Grobbereich 152_x0 anzeigt. Die Phasenbeziehung zwischen dem Magnetfeldkomponentensignal der y-Spule 116_2 und dem elektrischen Wechselstromsignal 106 weist eine zweite Phase (Zustand 2) auf, so dass die zweite Grobpositionsinformation den dritten y-Grobbereich 152_y2 anzeigt. Die Phasenbeziehung zwischen den Magnetfeldkomponentensignal der z-Spule 116_3 und dem elektrischen Wechselstromsignal 106 weist eine erste Phase (Zustand 1) auf, so dass die dritte Grobpositionsinformation den zweiten z-Grobbereich 152_z1 anzeigt.

Die angezeigten Grobbereiche 152_x0, 152_y2 und 152_z1 überlappen sich in dem Feinbereich 154_x0_y2_z1. Der Feinbereich 154_x0_y2_z1 zeigt die Position der Empfängerspulenanordnung 102 relativ zu der Leiterschleifenanordnung 110 an.

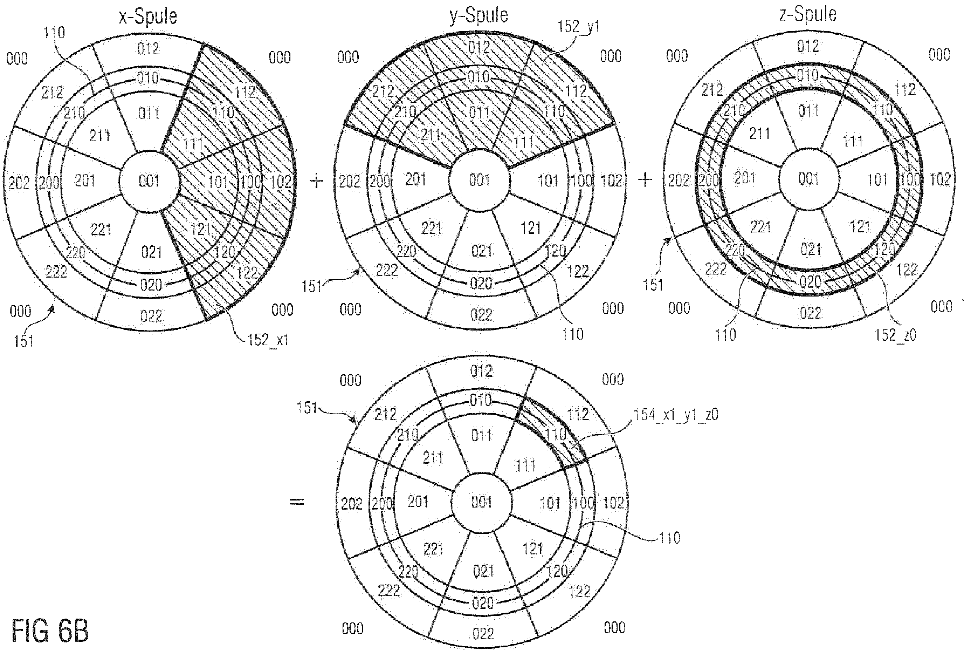

Fig. 6b zeigt in einer schematischen Ansicht Grobbereiche, die von den Grobpositionsinformationen der Phasenbeziehungen der Magnetfeldkomponentensignale der x-Spule 116_1, y-Spule 116_2 und z-Spule 116_3 angezeigt werden, sowie ein Feinbereich, der aus der Schnittmenge der angezeigten Grobbereiche resultiert.

In Fig. 6b weist die Phasenbeziehung zwischen dem Magnetfeldkomponentensignal der x-Spule 116_1 und dem elektrischen Wechselstromsignal 106 eine erste Phase (Zustand 1) auf, so dass die erste Grobpositionsinformation den zweiten x-Grobbereich 152_x1 anzeigt. Die Phasenbeziehung zwischen dem Magnetfeldkomponentensignal der y-Spule 116_2 und dem elektrischen Wechselstromsignal 106 weist eine erste Phase (Zustand 1) auf, so dass die zweite Grobpositionsinformation den zweiten y-Grobbereich 152_y1 anzeigt. Die Phasenbeziehung zwischen den Magnetfeldkomponentensignal der z-Spule 116_3 und dem elektrischen Wechselstromsignal 106 weist einen Phasensprung (Zustand 0) auf, so dass die dritte Grobpositionsinformation den ersten z-Grobbereich 152_z0 anzeigt.

Die angezeigten Grobbereiche 152_x1, 152_y1 und 152_z1 überlappen sich in dem Feinbereich 154_x1_y1_z0. Der Feinbereich 154_x1_y1_z0 zeigt die Position der Empfängerspulenanordnung 102 relativ zu der Leiterschleifenanordnung 110 an.

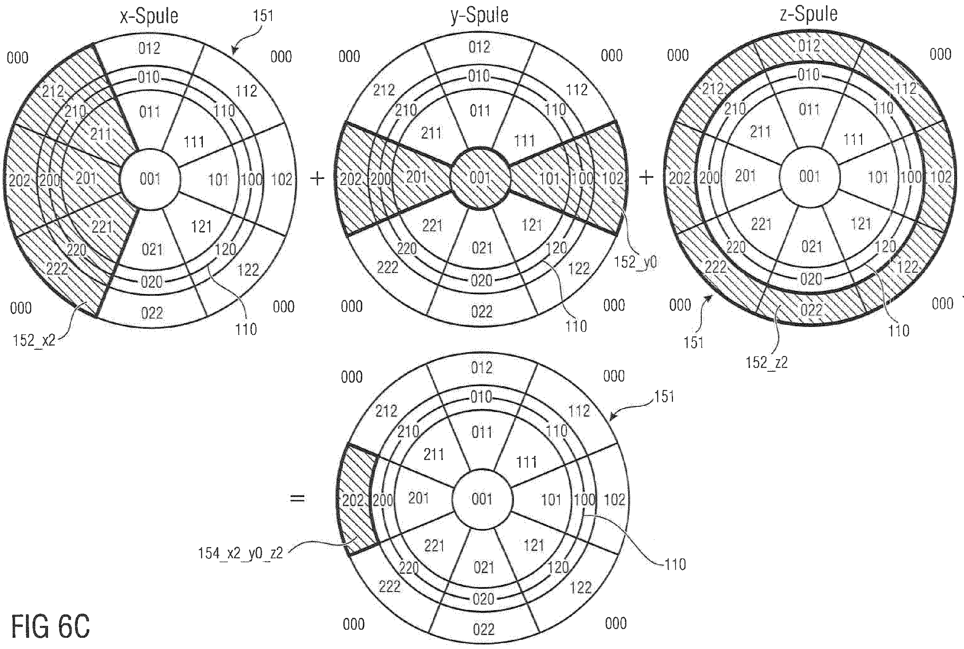

Fig. 6c zeigt in einer schematischen Ansicht Grobbereiche, die von den Grobpositionsinformationen der Phasenbeziehungen der Magnetfeldkomponentensignale der x-Spule 116_1, y-Spule 116_2 und z-Spule 116_3 angezeigt werden, sowie ein Feinbereich, der aus der Schnittmenge der angezeigten Grobbereiche resultiert.

In Fig. 6c weist die Phasenbeziehung zwischen dem Magnetfeldkomponentensignal der x-Spule 116_1 und dem elektrischen Wechselstromsignal 106 eine zweite Phase (Zustand 2) auf, so dass die erste Grobpositionsinformation (oder x-Grobpositionsinformation) den dritten x-Grobbereich 152_x2 anzeigt. Die Phasenbeziehung zwischen dem Magnetfeldkomponentensignal der 116_2 und dem elektrischen Wechselstromsignal 106 weist einen Phasensprung (Zustand 0) auf, so dass die zweite Grobpositionsinformation (oder y-Grobpositionsinformation) den ersten y-Grobbereich 152_y0 anzeigt. Die Phasenbeziehung zwischen den Magnetfeldkomponentensignal der z-Spule 116_3 und dem elektrischen Wechselstromsignal 106 weist eine zweite Phase (Zustand 2) auf, so dass die dritte Grobpositionsinformation (oder z-Grobpositionsinformation) den dritten z-Grobbereich 152_z2 anzeigt.

Die angezeigten Grobbereiche 152_x2, 152_y0 und 152_z2 überlappen sich in dem Feinbereich 154_x2_y0_z2. Der Feinbereich 154_x2_y0_z2 zeigt die Position der Empfängerspulenanordnung 102 relativ zu der Leiterschleifenanordnung 110 an.

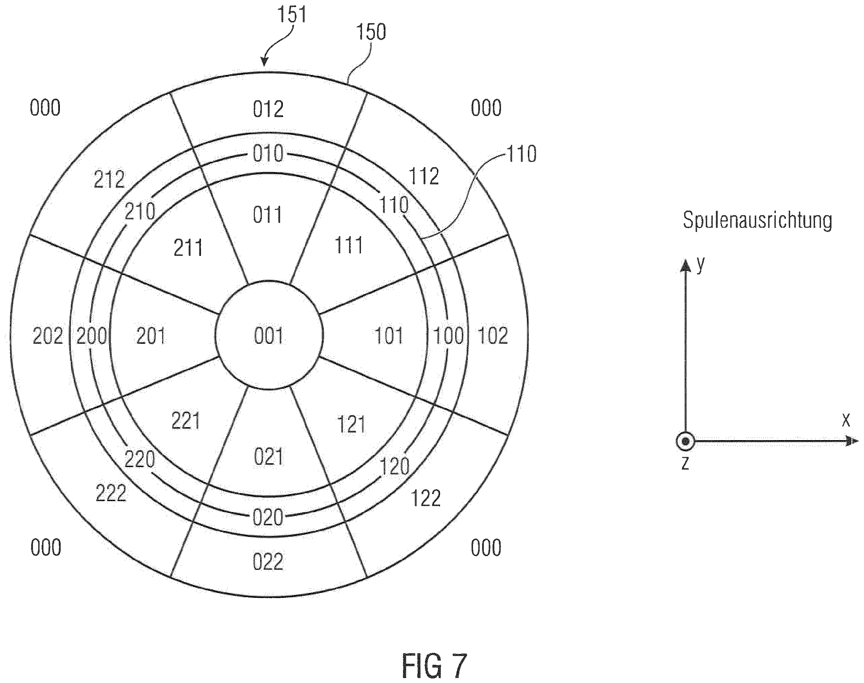

Fig. 7 zeigt eine schematische Ansicht der Leiterschleifenanordnung 110 sowie der Positionierungsfläche 151, die durch den Kreis 150 begrenzt wird und der Leiterschleifenanordnung 110 zugeordnet ist. Mit anderen Worten, Fig. 7 zeigt in einem Beispiel mit einer kreisförmigen Leiterschleifenanordnung (Bodenspule) 110 die einzelnen Felder bzw. Abschnitte bzw. Sektoren. Durch die Überlagerung der Grobbereiche, die durch die Grobpositionsinformationen angezeigt werden, die den Phasenbeziehungen zwischen der drei Magnetfeldkomponentensignalen 112 und dem elektrischen Wechselstromsignal 106 entnommen werden können, ergeben sich die in Fig. 7 gezeigten 26 möglichen Feinbereiche. Theoretisch sind 27 verschiedene Feinbereiche möglich, jedoch tritt der Zustand 002 im realen Aufbau nicht auf.

Wie in Fig. 7 zu erkennen ist, kann jeder der Feinbereiche durch einen dreistelligen Zustand beschrieben werden. Die erste Stelle des dreistelligen Zustands gibt dabei die Grobpositionsinformation der x-Spule 116_1 an, während die zweite Stelle des dreistelligen Zustands die Grobpositionsinformation der 116_2 angibt, und während die dritte Stelle des dreistelligen Zustands die Grobpositionsinformation der z-Spule 116_3 angibt. Jede Stelle des dreistelligen Zustands kann dabei die Werte 0, 1 oder 2 annehmen. Die möglichen Zustände sind in der nachfolgenden Tabelle zusammenfassend aufgelistet:

| Zustände | x-Spule | y-Spule | z-Spule |
|---|---|---|---|
| 0 | undefiniert | undefiniert | undefiniert |
| 1 | rechts | oben | innen |
| 2 | links | unten | außen |

Fig. 7 zeigt somit die unterscheidbaren Zustände, wenn eine 3D-Sensorspule 102 über der Leiterschleifenanordnung (Bodenspule) 110 bewegt wird. Der Zustand 0 bzw. undefiniert bezeichnet dabei die Position, bei der sich die Richtungsangaben, die sich aus dem asymmetrischen Sendesignal ermitteln lassen, gerade aufheben und deshalb zu einem undefinierten Zustand führen, der als solches auch erkannt werden und ausgewertet werden kann. Dies gilt insbesondere deshalb, da an dieser Stelle zwar keine Entscheidung auf Grundlage des Magnetfeldkomponentensignals getroffen werden kann, jedoch das Magnetfeldkomponentensignal an sich detektiert werden kann. Zeigen alle drei Spulen der 3D-Sensorspule 102 diesen Zustand, dann bedeutet dies, dass sich diese Sensorspule 102 außerhalb der Signalreichweite der Leiterschleifenanordnung (Bodenspule) 110 befindet, was in Fig. 7 durch den Zustand 000 gekennzeichnet ist.

Werden mehrere solcher Empfängerspulenanordnungen 102 zusätzlich in die Empfängerseite eines Spulensystems integriert, bei denen die gegenseitige Abdeckung maximiert werden soll, und sendet auf der anderen Seite das entsprechende Signal, so kann dieses Prinzip mehrmals angewendet werden.

Zusätzlich kann durch Feldstärkemessungen an 3D-Sensorspulen 110 mit einer gewissen Genauigkeit (abhängig von Anzahl und Position der Sensorspulen) auf die aktuelle Positionierung der Systemspulen 110 und 111 zueinander geschlossen werden und entsprechende Korrekturdaten für die Positionierung des Übertragungssystems gewonnen werden. Dem System aus Fig. 1b können dazu noch zusätzliche Sensorspulen hinzugefügt werden, die durch die Auswerteeinrichtung gemäß Vorrichtung 100 ausgewertet werden können.

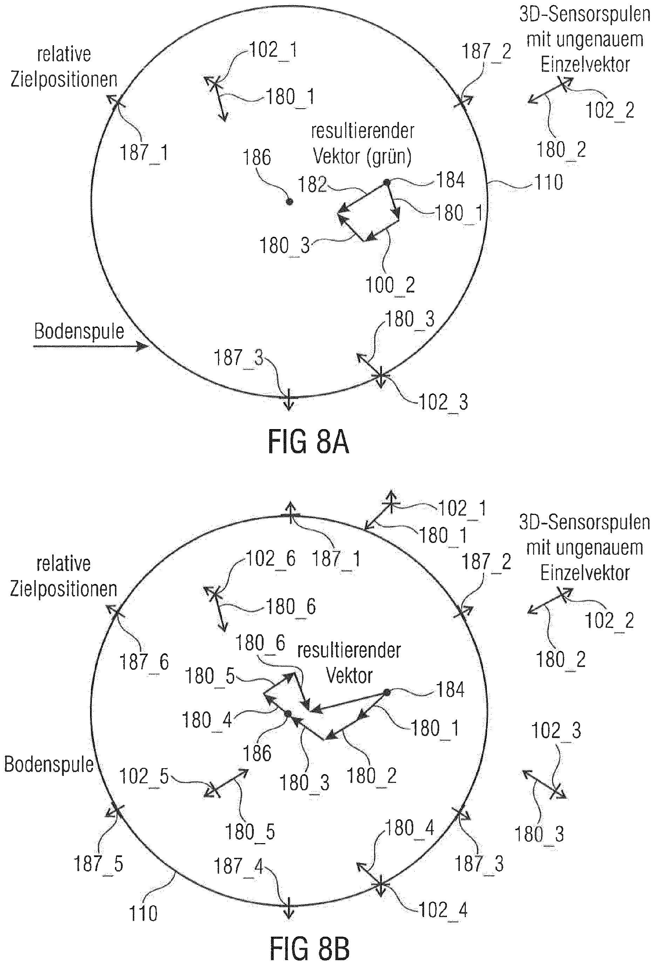

Fig. 8a zeigt eine schematische Ansicht einer Leiterstreifenanordnung 110 und einer Messvorrichtung 100 mit drei Empfängerspulenanordnungen 102_1 bis 102_3. Die Auswertung der Magnetfeldkomponentensignale der zwei weiteren Empfängerspulenanordnungen 102_2 und 102_3 durch die Auswerteeinrichtung erfolgt analog wie die Auswertung der Empfängerspulenanordnung 102_1.

Bei Ausführungsbeispielen können den Feinbereichen 154 der Positionierungsfläche Richtungsinformationen zugeordnet sein, die auf den geometrischen Schwerpunkt bzw. Mittelpunkt der Leiterschleifenanordnung 110 hindeuten, wobei die Auswerteeinrichtung 104 ausgebildet sein kann, um basierend auf der Richtungsinformation, die dem Feinbereich zugeordnet ist, der durch die Schnittmenge der angezeigten Grobbereiche resultiert, ein Richtungssignal auszugeben, das eine geschätzte Richtung zu dem geometrischen Schwerpunkt der Leiterschleifenanordnung 110 hindeutet bzw. zeigt.

Bezogen auf Fig. 8a kann die Auswerteeinrichtung 102 demnach eine erste Richtungsinformation 180_1 basierend auf den Magnetfeldkomponentensignalen der ersten Empfängerspulenanordnung 102_1 ermitteln, eine zweite Richtungsinformation 180_2 basierend auf den Magnetfeldkomponentensignalen der zweiten Empfängerspulenanordnung 102_2 und eine dritte Richtungsinformation 180_3 basierend auf den Magnetfeldkomponentensignalen der dritten Empfängerspulenanordnung 102_3. Diese drei Richtungsinformationen 180_1, 180_2 und 180_3 können kombiniert werden, um eine resultierende Richtungsinformation 182 zu erhalten, wie dies in Fig. 8a gezeigt ist. Die resultierende Richtungsinformation 182 kann dabei von einer aktuellen Position 184 der Messvorrichtung zu dem geometrischen Mittelpunkt bzw. Schwerpunkt 186 der Leiterschleifenanordnung 110 zeigen. Die aktuelle Position 184 kann dabei ein geometrischer Schwerpunkt bzw. Mittelpunkt einer (Empfänger) Leiterschleifenanordnung 111 eines Fahrzeugs sein, wobei die drei Empfängerspulenanordnungen 102_1 bis 102_3 der Messvorrichtung 100 in gleichen Abständen (äquidistant) zu dem geometrischen Mittelpunkt bzw. Schwerpunkt der (Empfänger) 184 Leiterschleifenanordnung 111 angeordnet sein können.

Ferner sind in Fig. 8a beispielhaft relative Zielpositionen 187_1 bis 187_3 der Empfängerspulenanordnungen 102_1 bis 102_3 eingezeichnet. Aktuelle Positionen der Empfängerspulenanordnungen 102_1 bis 102_3 stimmen dabei mit den relativen Zielpositionen 187_1 bis 187_3 überein, wenn die aktuelle Position 184 der Messvorrichtung, z.B. der geometrische Mittelpunkt bzw. Schwerpunkt der (Empfänger) Leiterschleifenanordnung 111, mit dem geometrischen Mittelpunkt bzw. Scherpunkt 186 der Leiterschleifenanordnung 110 übereinstimmt.

Fig. 8b zeigt eine schematische Ansicht einer Leiterschleifenanordnung 110 und einer Messvorrichtung 100 mit sechs Empfängerspulenanordnungen 102_1 bis 102_6. Die Auswerteeinrichtung 102 kann dabei eine erste Richtungsinformation 180_1 basierend auf den Magnetfeldkomponentensignalen der ersten Empfängerspulenanordnung 102_1, eine zweite Richtungsinformation 180_2 basierend auf den Magnetfeldkomponentensignalen der zweiten Empfängerspulenanordnung 102_2, eine dritte Richtungsinformation 180_3 basierend auf den Magnetfeldkomponentensignalen der dritten Empfängerspulenanordnung 102_3, eine vierte Richtungsinformation 180_4 basierend auf den Magnetfeldkomponentensignalen der vierten Empfängerspulenanordnung 102_4, eine fünfte Richtungsinformation 180_5 basierend auf den Magnetfeldkomponentensignalen der fünften Empfängerspulenanordnung 102_5 und eine sechste Richtungsinformation 180_6 basierend auf den Magnetfeldkomponentensignalen der sechsten Empfängerspulenanordnung 102_6 ermitteln. Diese sechs Richtungsinformationen 180_1 bis 180_6 können kombiniert werden, um eine resultierende Richtungsinformation 182 zu erhalten, wie dies in Fig. 8b gezeigt ist. Die resultierende Richtungsinformation 182 kann dabei von einer aktuellen Position 184 der Messvorrichtung zu dem geometrischen Mittelpunkt bzw. Schwerpunkt 186 der Leiterschleifenanordnung 110 zeigen. Die aktuelle Position 184 kann dabei ein geometrischer Schwerpunkt bzw. Mittelpunkt einer (Empfänger) Leiterschleifenanordnung 111 eines Fahrzeugs sein, wobei die drei Empfängerspulenanordnungen 102_1 bis 102_6 der Messvorrichtung 100 in gleichen Abständen (äquidistant) zu dem geometrischen Mittelpunkt bzw. Schwerpunkt 184 der (Empfänger) Leiterschleifenanordnung 111 angeordnet sein können.

Ferner sind in Fig. 8b beispielhaft relative Zielpositionen 187_1 bis 187_6 der Empfängerspulenanordnungen 102_1 bis 102_6 eingezeichnet. Aktuelle Positionen der Empfängerspulenanordnungen 102_1 bis 102_6 stimmen dabei mit den relativen Zielpositionen 187_1 bis 187_6 überein, wenn die aktuelle Position 184 der Messvorrichtung, z.B. der geometrische Mittelpunkt bzw. Schwerpunkt der (Empfänger) Leiterschleifenanordnung 111, mit dem geometrischen Mittelpunkt bzw. Scherpunkt 186 der Leiterschleifenanordnung 110 übereinstimmt.

Mit anderen Worten, Fig. 8a zeigt eine große Leiterschleifenanordnung (Bodenspule) 110 und drei Empfängerspulenanordnungen (Sensorspulen) 102_1 bis 102_3. Die Leiterschleifenanordnung 110 sendet dabei ein Positionssignal aus. Jede der Empfängerspulenanordnungen (Sensorspulen) 102_1 bis 102_3 kann aufgrund von Phasenmessungen einen Einzelvektor 180_1 bis 180_3 liefern, relativ zur Zielposition (geometrischer Mittelpunkt bzw. Schwerpunkt 186 der Leiterschleifenanordnung 110). Wenn diese Einzelvektoren 180_1 bis 180_3 kombiniert werden, so ergibt sich aus dem resultierenden Vektor 182 eine Richtungsangabe zur korrekten Position 186. Im Folgenden wird beschrieben, wie die Genauigkeit dieses Ergebnisses, welches nur auf der Phasenmessung basiert, verbessert werden kann.

Erfolgt eine Phasen- und Amplitudenmessung, so kann der Feldvektor 182 genauer bestimmt werden. Wird die Anzahl der Sensorspulen erhöht, so erhöht sich auch die Genauigkeit des resultierenden Vektors zur Positionskorrektur, wie dies in Fig. 8b gezeigt ist. Diese Auswertung bezieht sich nur auf eine Signalauswertung (Amplitude/Phase) mit 3D-Sensorspulen unabhängig von der Signalform des Sendesignals. Wird dieses Verfahren mit dem oben beschriebene asymmetrischen Signal kombiniert, so kann die Genauigkeit der Positionierung noch erhöht werden.

Das beschriebene System ist auch umkehrbar, so dass der bewegliche Systemteil das Positionierungssignal aussendet.

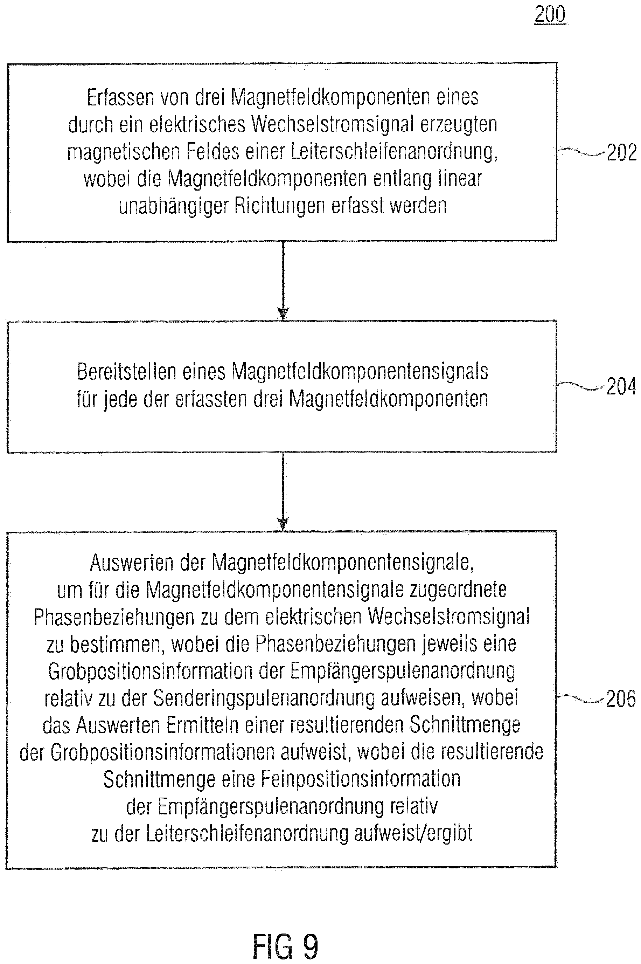

Fig. 9 zeigt ein Flussdiagramm eines Messverfahrens 200 gemäß einem Ausführungsbeispiel der vorliegenden Erfindung. Das Messverfahren 200 umfasst einen Schritt 202 des Erfassens von drei Magnetfeldkomponenten eines durch ein elektrisches Wechselstromsignal erzeugten magnetischen Feldes einer Leiterschleifenanordnung, wobei die Magnetfeldkomponenten entlang linear unabhängiger Richtungen erfasst werden; einen Schritt 204 des Bereitstellens eines Magnetfeldkomponentensignals für jede der erfassten drei Magnetfeldkomponenten; und einen Schritt 206 des Auswertens der Magnetfeldkomponentensignale, um für die Magnetfeldkomponentensignale zugeordnete Phasenbeziehungen zu dem elektrischen Wechselstromsignal zu bestimmen, wobei die Phasenbeziehungen jeweils eine Grobpositionsinformation der Empfängerspulenanordnung relativ zu der Senderingspulenanordnung aufweisen, wobei das Auswerten Ermitteln einer resultierenden Schnittmenge der Grobpositionsinformationen aufweist, wobei die resultierende Schnittmenge eine Feinpositionsinformation der Empfängerspulenanordnung relativ zu der Leiterschleifenanordnung aufweistiergibt.

Wie bereits erwähnt ist bei der Übertragung von Daten und oder Energie mittels verkoppelter Spulen (Leiterschleifenanordnungen) die exakte Positionierung der an der Übertragung beteiligten Spulen zueinander entscheidend für eine effiziente und fehlerfreie Übertragung. Im Folgenden wird eine Datenübertragungsvorrichtung beschrieben, bei der die Übertragung von Daten mittels verkoppelter Spulen (Leiterschleifenanordnungen) erfolgt. Die oben beschriebenen Merkmale sind dabei ebenfalls auf die Datenübertragungsvorrichtung anwendbar bzw. übertragbar.

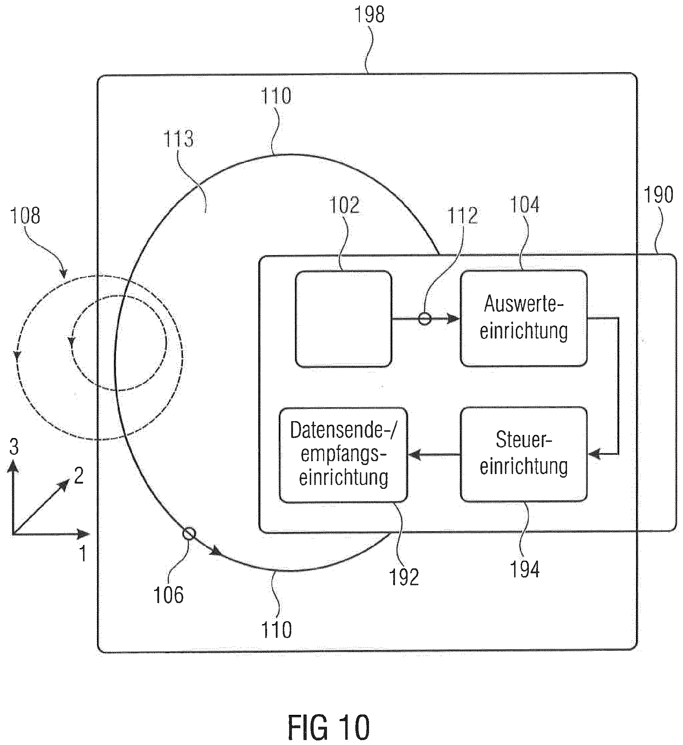

Fig. 10 zeigt ein schematisches Blockschaltbild einer Datenübertragungsvorrichtung 190 gemäß einem Ausführungsbeispiel der vorliegenden Erfindung. Die Datenübertragungsvorrichtung weist eine Datensende- und/oder Datenempfangseinrichtung 192, eine Empfängerspulenanordnung 102, eine Auswerteeinrichtung 104 und eine Steuereinrichtung 194 auf. Die Empfängerspulenanordnung 102 ist ausgebildet, um zumindest eine Magnetfeldkomponente eines durch ein elektrisches Wechselstromsignal 106 erzeugten magnetischen Feldes 108 einer Leiterschleifenanordnung 110 einer weiteren Datenübertragungsvorrichtung 198 zu erfassen und um für die erfasste Magnetfeldkomponente 108 ein Magnetfeldkomponentensignal 112 bereitzustellen. Die Auswerteeinrichtung 104 ist ausgebildet, um das Magnetfeldkomponentensignal 112 auszuwerten, um eine Phasenbeziehung zwischen dem Magnetfeldkomponentensignal 112 und dem elektrischen Wechselstromsignal 106 zu bestimmen, wobei die Phasenbeziehungen eine Positionsinformation aufweist, die angibt, ob eine Projektion der Empfängerspulenanordnung 102 senkrecht zu einer Leiterschleifenfläche innerhalb der Leiterschleifenfläche liegt, wobei die Leiterschleifenfläche in einer Ebene liegt, die durch die Leiterschleifenanordnung 110 aufgespannt wird, und wobei die Leiterschleifenfläche durch die Leiterschleifenanordnung 110 begrenzt wird. Die Steuervorrichtung 194 ist ausgebildet, um eine Datenübertragung der Datensende- und/oder Datenempfangseinrichtung 192 nur dann freizugeben, wenn die Projektion der Empfängerspulenanordnung 102 senkrecht zu der Leiterschleifenfläche innerhalb oder außerhalb der Leiterschleifenfläche liegt.

Bei Ausführungsbeispielen kann die Empfängerspulenanordnung 102 ausgebildet sein, um eine Magnetfeldkomponente des magnetischen Feldes der Leiterschleifenanordnung zu erfassen, die orthogonal zu der Leiterschleifenfläche 113 verläuft. Hierzu kann die Empfängerspulenanordnung 102 beispielsweise die z-Spule 116_3 aufweisen.

Natürlich kann die Empfängerspulenanordnung 102 auch die x-Spule 116_1 und/oder y-Spule 116_2 aufweisen, wobei die Auswerteinrichtung 104 ausgebildet sein kann, um die Position der Empfängerspulenanordnung 102 relativ zu der Leiterschleifenanordnung 110 ferner basierend auf den Magnetfeldkomponentensignalen der x-Spule 116_1 und y-Spule 116_2 zu ermitteln. Mit anderen Worten, die Datenübertragungsvorrichtung 190 kann die oben beschriebene Messvorrichtung 100 aufweisen, wobei die Steuervorrichtung 194 ausgebildet sein kann, um basierend auf der von der Auswerteinrichtung 104 ermittelten Feinposition die Datenübertragung der Datensende- und/oder Datenempfangseinrichtung 192 freizugeben.

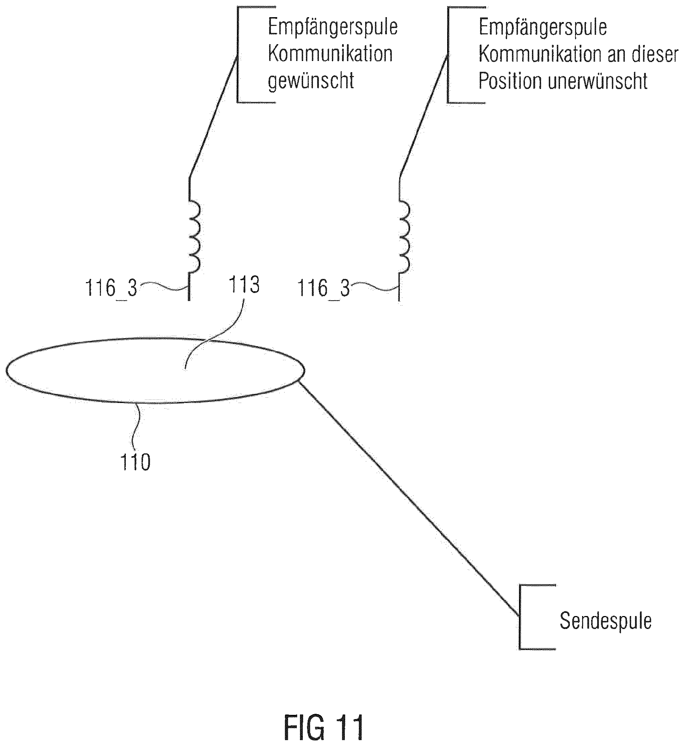

Mit der oben beschriebenen Vorrichtung 100 bzw. dem oben beschrieben Verfahren 200 ist es somit auch möglich bei einem induktiven Datenübertragungssystem zu gewährleisten dass eine Übertragung nur stattfinden kann wenn sich die Empfängerspule innerhalb 113 oder sogar an einer bestimmten Position innerhalb 113 der Senderspule 110 befindet. Dazu kann die Empfängerspule 116_3 geometrisch kleiner als die Senderspule 110 des Systems sein bzw. die Signalauswertung wie prinzipiell in Fig. 3 gezeigt anwendbar sein. Der Schritt der Positionsermittlung kann z.B. vor der eigentlichen Kommunikationsübertragung stattfinden. Damit ist gerade bei nebeneinander liegender Übertragungsstationen eine Fehlzuordnung der Kommunikationspartner, z.B. aufgrund von Überreichweiten verhindert, vgl. Fig. 11.

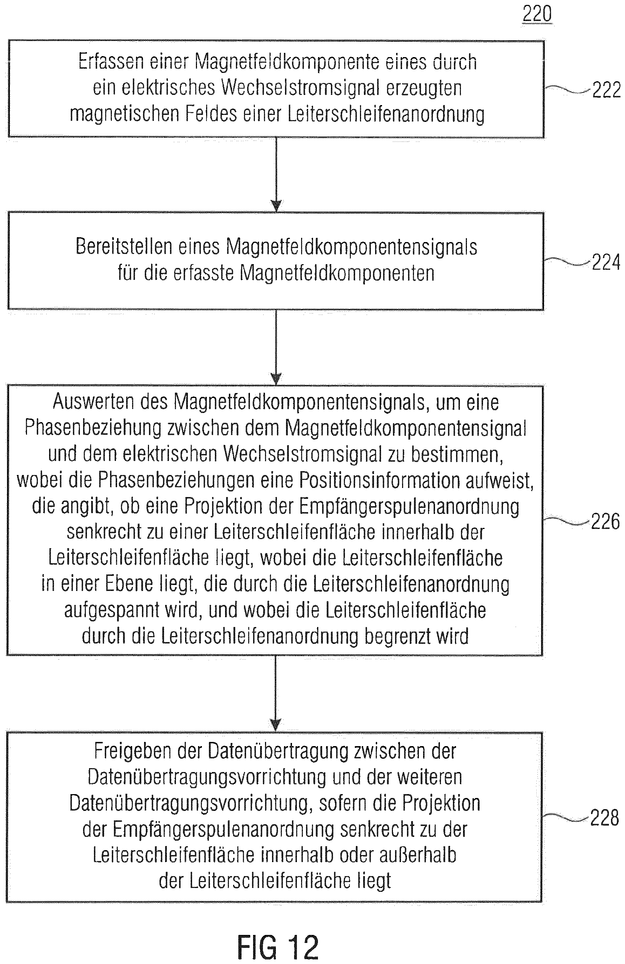

Fig. 12 zeigt ein Flussdiagramm eines Verfahrens zur Datenübertragung zwischen einer Datenübertragungsvorrichtung und einer weiteren Datenübertragungsvorrichtung. Das Verfahren umfasst einen Schritt 222 des Erfassens einer Magnetfeldkomponente eines durch ein elektrisches Wechselstromsignal erzeugten magnetischen Feldes einer Leiterschleifenanordnung; einen Schritt 224 des Bereitstellens eines Magnetfeldkomponentensignals für die erfasste Magnetfeldkomponente; einen Schritt 226 des Auswertens des Magnetfeldkomponentensignals, um eine Phasenbeziehung zwischen dem Magnetfeldkomponentensignal und dem elektrischen Wechselstromsignal zu bestimmen, wobei die Phasenbeziehungen eine Positionsinformation aufweist, die angibt, ob eine Projektion der Empfängerspulenanordnung senkrecht zu einer Leiterschleifenfläche innerhalb der Leiterschleifenfläche liegt, wobei die Leiterschleifenfläche in einer Ebene liegt, die durch die Leiterschleifenanordnung aufgespannt wird, und wobei die Leiterschleifenfläche durch die Leiterschleifenanordnung begrenzt wird; und einen Schritt 228 des Freigebens der Datenübertragung zwischen der Datenübertragungsvorrichtung und der weiteren Datenübertragungsvorrichtung, sofern die Projektion der Empfängerspulenanordnung senkrecht zu der Leiterschleifenfläche innerhalb oder außerhalb der Leiterschleifenfläche liegt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Messvorrichtung (100), mit folgenden Merkmalen:
eine Empfängerspulenanordnung (102), die ausgebildet ist, um drei Magnetfeldkomponenten eines durch ein elektrisches Wechselstromsignal (106) erzeugten magnetischen Feldes (108) einer Leiterschleifenanordnung (110) zu erfassen und um für jede der erfassten drei Magnetfeldkomponenten ein Magnetfeldkomponentensignal (112) bereitzustellen, wobei die Empfängerspulenanordnung (102) ausgebildet ist, um die drei Magnetfeldkomponenten entlang linear unabhängiger Richtungen zu erfassen; und
eine Auswerteeinrichtung (104), die ausgebildet ist, um die Magnetfeldkomponentensignale (112) auszuwerten, um für die Magnetfeldkomponentensignale (112) zugeordnete Phasenbeziehungen zu dem elektrischen Wechselstromsignal (106) zu bestimmen, wobei die Phasenbeziehungen jeweils eine Grobpositionsinformation (152) der Empfängerspulenanordnung 102 relativ zu der Leiterschleifenanordnung (110) aufweisen, und wobei die Auswerteeinrichtung (104) ausgebildet ist, um eine resultierende Schnittmenge der Grobpositionsinformationen zu ermitteln, wobei die resultierende Schnittmenge eine Feinpositionsinformation der Empfängerspulenanordnung (102) relativ zu der Leiterschleifenanordnung (110) aufweist;
wobei der Leiterschleifenanordnung (110) eine Positionierungsfläche (151) zugeordnet ist, wobei die Positionierungsfläche (151) parallel zu einer Leiterschleifenebene verläuft, die durch die Leiterschleifenanordnung (110) aufgespannt wird, und wobei die Positionierungsfläche (151) gleich groß oder größer ist, als eine Leiterschleifenfläche (113), die in der Leiterschleifenebene liegt und durch die Leiterschleifenanordnung (110) begrenzt wird;
wobei die Grobpositionsinformationen jeweils einen Grobbereich von mehreren möglichen Grobbereichen (152_x0:152_x2:152_y0:152_y2; 152_z0:152_y2) der Positionierungsfläche (151) anzeigen, wobei sich die durch die Grobpositionsinformationen angezeigten Grobbereiche (152_x0:152_x2:152_y0:152_y2; 152_z0:152_y2) überschneiden; und
wobei die Feinpositionsinformation einen Feinbereich von mehreren möglichen Feinbereichen (154_x0_y0_z0:154_x2_y2_z2) der Positionierungsfläche (151) anzeigt, die durch die Schnittmenge der angezeigten Grobbereiche (152_x0:152_x2:152_y0:152_y2; 152_z0:152_y2) resultiert.

2. Messvorrichtung (100) nach Anspruch 1, wobei die Auswerteinrichtung (104) ausgebildet ist, um basierend auf dem Feinbereich (154_x0_y0_z0:154_x2_y2_z2), der durch die Schnittmenge der angezeigten Grobbereiche (52_x0:152_x2:152_y0:152_y2; 152_z0:152_y2) resultiert, ein Positionssignal (132) auszugeben, das eine Position der Empfängerspulenanordnung (102) relativ zu der Leiterschleifenanordnung (110) anzeigt.

3. Messvorrichtung (100) nach Anspruch 1 oder 2, wobei den Feinbereichen (154_x0_y0_z0:154_x2_y2_z2) der Positionierungsfläche (151) Richtungsinformationen (180_1:180_6) zugeordnet sind, die auf den geometrischen Schwerpunkt (186) der Leiterschleifenanordnung hindeuten, wobei die Auswerteinrichtung (104) ausgebildet ist, um basierend auf der Richtungsinformation (180_1:180_6), die dem Feinbereich (154_x0_y0_z0:154_x2_y2_z2) zugeordnet ist, der durch die Schnittmenge der angezeigten Grobbereiche (152_x0:152_x2:152_y0:152_y2; 152_z0:152_y2) resultiert, ein Richtungssignal (133) auszugeben, das eine geschätzte Richtung zu dem geometrischen Schwerpunkt (186_1:186:6) der Leiterschleifenanordnung (110) anzeigt.

4. Messvorrichtung (100) nach einem der Ansprüche 1 bis 3, wobei die Phasenbeziehungen die den Magnetfeldkomponentensignalen (112) zugeordnet sind jeweils eines aus einer erste Phase, einer zweite Phase oder einem Phasensprung ist, wobei die Grobpositionsinformation, die die Phasenbeziehungen jeweils aufweisen, bei dem Phasensprung einen ersten Grobbereich (152_x0;152_y0;152_z0) von den möglichen Grobbereichen (152_x0:152_x2:152_y0:152_y2; 152_z0:152_y2) anzeigt, wobei die Grobpositionsinformation bei der erste Phase einen zweiten Grobbereich (152_x2;152_y2;152_z2) von den möglichen Grobbereichen (152_x0:152_x2:152_y0:152_y2; 152_z0:152_y2) anzeigt, und wobei die Grobpositionsinformation bei der zweiten Phase einen dritten Grobbereich (152_x2;152_y2;152_z2) von den möglichen Grobbereichen (152_x0:152_x2:152_y0:152_y2; 152_z0:152_y2) anzeigt, wobei sich der erste Grobbereich (152_x0;152_y0;152_z0), der zweite Grobbereich (152_x1;152_y1;152_z1) und der dritte Grobbereich (152_x2;152_y2;152_z2), die durch die jeweilige Grobpositionsinformation angezeigt werden nicht überschneiden.

5. Messvorrichtung (100) nach einem der Ansprüche 1 bis 4, wobei das magnetische Feld (108) der Leiterschleifenanordnung (110) durch ein unsymmetrisches elektrisches Wechselstromsignal (106) erzeugt wird; und
wobei die Auswerteeinrichtung (104) ausgebildet ist, um die Magnetfeldkomponentensignale (112) auszuwerten, um Amplitudenverläufe der Magnetfeldkomponenten (138, 144) zu ermitteln, wobei die Amplitudenverläufe (138, 144) jeweils eine zusätzliche Positionsinformation der Empfängerspulenanordnung (102) relativ zu der Leiterschleifenanordnung (110) aufweisen, und wobei die Auswerteeinrichtung (104) ausgebildet ist, um die zusätzlichen Positionsinformationen und die Grobpositionsinformationen oder Feinpositionsinformation zu kombinieren.

6. Messvorrichtung (100) nach einem der Ansprüche 1 bis 5, wobei die Phasenbeziehung eine Phasenverschiebung zu dem elektrischen Wechselstromsignal oder ein Phasensprung ist.

7. Messvorrichtung (100) nach einem der Ansprüche 1 bis 6, wobei eine erste Phasenbeziehung, die einem ersten Magnetfeldkomponentensignal der Magnetfeldkomponentensignale (112) zugeordnet ist, ein Phasensprung beim Überqueren eines Leiterbereichs (110_1, 110_2) der Leiterschleifenanordnung (110) aufweist.

8. Messvorrichtung (100) nach einem der Ansprüche 1 bis 7, wobei zumindest eine zweite Phasenbeziehung, die einem zweiten Magnetfeldkomponentensignal der Magnetfeldkomponentensignale (112) zugeordnet ist, einen Phasensprung beim Überqueren eines geometrischen Schwerpunkts (186) der Leiterschleifenanordnung (110) aufweist.

9. Messvorrichtung (100) nach einem der Ansprüche 1 bis 8, wobei die drei linear unabhängigen Richtungen orthogonale Richtungen sind.

10. Messvorrichtung (100) nach einem der Ansprüche 1 bis 9, wobei die Empfängerspulenanordnung (102) drei Spulen (116_1:116_3) aufweist, die relativ zueinander angeordnet sind, um die drei Magnetfeldkomponenten des erzeugten magnetischen Feldes (108) der Leiterschleifenanordnung (110) zu erfassen.

11. Positionierungssystem, mit folgenden Merkmalen:
einer Messeinrichtung (100) nach einem der Ansprüche 1 bis 10; und
einer Leiterschleifenanordnung (110).

12. Verwenden einer Messvorrichtung (100) nach einem der Ansprüche 1 bis 11 zum Positionieren eines Fahrzeugs (114) auf einer Ladevorrichtung (117) zum Laden eines elektrischen Energiespeichers des Fahrzeugs (114), wobei die Ladevorrichtung die Leiterschleifenanordnung (110) aufweist.

13. Messverfahren (200), mit folgenden Schritten;
Erfassen (202) von drei Magnetfeldkomponenten eines durch ein elektrisches Wechselstromsignal erzeugten magnetischen Feldes einer Leiterschleifenanordnung, wobei die Magnetfeldkomponenten entlang linear unabhängiger Richtungen erfasst werden;
Bereitstellen (204) eines Magnetfeldkomponentensignals für jede der erfassten drei Magnetfeldkomponenten; und
Auswerten (206) der Magnetfeldkomponentensignale, um für die Magnetfeldkomponentensignale zugeordnete Phasenbeziehungen zu dem elektrischen Wechselstromsignal zu bestimmen, wobei die Phasenbeziehungen jeweils eine Grobpositionsinformation der Empfängerspulenanordnung relativ zu der Senderingspulenanordnung aufweisen;
wobei das Auswerten (206) Ermitteln einer resultierenden Schnittmenge der Grobpositionsinformationen aufweist, wobei die resultierende Schnittmenge eine Feinpositionsinformation der Empfängerspulenanordnung relativ zu der Leiterschleifenanordnung aufweist/ergibt;
wobei der Leiterschleifenanordnung (110) eine Positionierungsfläche (151) zugeordnet ist, wobei die Positionierungsfläche (151) parallel zu einer Leiterschleifenebene verläuft, die durch die Leiterschleifenanordnung (110) aufgespannt wird, und wobei die Positionierungsfläche (151) gleich groß oder größer ist, als eine Leiterschleifenfläche (113), die in der Leiterschleifenebene liegt und durch die Leiterschleifenanordnung (110) begrenzt wird;
wobei die Grobpositionsinformationen jeweils einen Grobbereich von mehreren möglichen Grobbereichen (152_x0:152_x2:152_y0:152_y2; 152_z0:152_y2) der Positionierungsfläche (151) anzeigen, wobei sich die durch die Grobpositionsinformationen angezeigten Grobbereiche (152_x0:152_x2:152_y0:152_y2; 152_z0:152_y2) überschneiden; und
wobei die Feinpositionsinformation einen Feinbereich von mehreren möglichen Feinbereichen (154_x0_y0_z0:154_x2_y2_z2) der Positionierungsfläche (151) anzeigt, die durch die Schnittmenge der angezeigten Grobbereiche (152_x0:152_x2:152_y0:152_y2; 152_z0:152_y2) resultiert.

14. Computerprogramm zur Durchführung des Verfahrens nach Anspruch 13, wenn das Computerprogramm auf einem Computer oder Mikroprozessor ausgeführt wird.

15. Datenübertragungsvorrichtung (190), mit folgenden Merkmalen:
einer Datensende- und/oder Datenempfangseinrichtung (192);
eine Empfängerspulenanordnung (102), die ausgebildet ist, um drei Magnetfeldkomponenten eines durch ein elektrisches Wechselstromsignal (106) erzeugten magnetischen Feldes (108) einer Leiterschleifenanordnung (110) einer weiteren Datenübertragungsvorrichtung (198) zu erfassen und um für jede der erfassten Magnetfeldkomponenten ein Magnetfeldkomponentensignal (112) bereitzustellen, wobei die Empfängerspulenanordnung (102) ausgebildet ist, um die drei Magnetfeldkomponenten entlang linear unabhängiger Richtungen zu erfassen;
einer Auswerteeinrichtung (104), die ausgebildet ist, um das Magnetfeldkomponentensignale (112) auszuwerten, um für die Magnetfeldkomponentensignale (112) zugeordnete Phasenbeziehungen zu dem elektrischen Wechselstromsignal (106) zu bestimmen, wobei die Phasenbeziehungen jeweils eine Grobpositionsinformation (152) der Empfängerspulenanordnung 102 relativ zu der Leiterschleifenanordnung (110) aufweisen, und wobei die Auswerteeinrichtung (104) ausgebildet ist, um eine resultierende Schnittmenge der Grobpositionsinformationen zu ermitteln, wobei die resultierende Schnittmenge eine Feinpositionsinformation der Empfängerspulenanordnung (102) relativ zu der Leiterschleifenanordnung (110) aufweist, die angibt, ob eine Projektion der Empfängerspulenanordnung (102) senkrecht zu einer Leiterschleifenfläche (113) innerhalb der Leiterschleifenfläche (113) liegt, wobei die Leiterschleifenfläche (113) in einer Ebene liegt, die durch die Leiterschleifenanordnung (110) aufgespannt wird, und wobei die Leiterschleifenfläche (113) durch die Leiterschleifenanordnung (110) begrenzt wird; und
eine Steuereinrichtung (194), die ausgebildet ist, um eine Datenübertragung der Datensende- und/oder Datenempfangseinrichtung (192) nur dann freizugeben, wenn die Projektion der Empfängerspulenanordnung (102) senkrecht zu der Leiterschleifenfläche (113) innerhalb oder außerhalb der Leiterschleifenfläche (113) liegt;
wobei der Leiterschleifenanordnung (110) eine Positionierungsfläche (151) zugeordnet ist, wobei die Positionierungsfläche (151) parallel zu einer Leiterschleifenebene verläuft, die durch die Leiterschleifenanordnung (110) aufgespannt wird, und wobei die Positionierungsfläche (151) gleich groß oder größer ist, als eine Leiterschleifenfläche (113), die in der Leiterschleifenebene liegt und durch die Leiterschleifenanordnung (110) begrenzt wird;
wobei die Grobpositionsinformationen jeweils einen Grobbereich von mehreren möglichen Grobbereichen (152_x0:152_x2:152_y0:152_y2; 152_z0:152_y2) der Positionierungsfläche (151) anzeigen, wobei sich die durch die Grobpositionsinformationen angezeigten Grobbereiche (152_x0:152_x2:152_y0:152_y2; 152_z0:152_y2) überschneiden; und
wobei die Feinpositionsinformation einen Feinbereich von mehreren möglichen Feinbereichen (154_x0_y0_z0:154_x2_y2_z2) der Positionierungsfläche (151) anzeigt, die durch die Schnittmenge der angezeigten Grobbereiche (152_x0:152_x2:152_y0:152_y2; 152_z0:152_y2) resultiert.

16. Datenübertragungsvorrichtung (190) nach Anspruch 15, wobei die Empfängerspulenanordnung (102) ausgebildet ist, um eine Magnetfeldkomponente des magnetischen Feldes (108) der Leiterschleifenanordnung (110) zu erfassen, die orthogonal zu der Leiterschleifenfläche verläuft.

17. Datenübertragungssystem, mit folgenden Merkmalen:
einer Datenübertragungsvorrichtung (190) nach Anspruch 17 oder 18; und
einer weiteren Datenübertragungsvorrichtung (198) mit der Leiterschleifenanordnung (110).

18. Verfahren (220) zur Datenübertragung zwischen einer Datenübertragungsvorrichtung (190) und einer weiteren Datenübertragungsvorrichtung (198), mit folgenden Schritten:
Erfassen (222) von drei Magnetfeldkomponenten eines durch ein elektrisches Wechselstromsignal erzeugten magnetischen Feldes einer Leiterschleifenanordnung, wobei die Magnetfeldkomponenten entlang linear unabhängiger Richtungen erfasst werden;
Bereitstellen (224) eines Magnetfeldkomponentensignals für jede der erfassten Magnetfeldkomponenten;
Auswerten (226) Magnetfeldkomponentensignale, um für die Magnetfeldkomponentensignale zugeordnete Phasenbeziehungen zu dem elektrischen Wechselstromsignal zu bestimmen, wobei die Phasenbeziehungen jeweils eine Grobpositionsinformation der Empfängerspulenanordnung relativ zu der Senderingspulenanordnung aufweisen, wobei das Auswerten (206) Ermitteln einer resultierenden Schnittmenge der Grobpositionsinformationen aufweist, wobei die resultierende Schnittmenge eine Feinpositionsinformation der Empfängerspulenanordnung relativ zu der Leiterschleifenanordnung aufweist/ergibt, die angibt, ob eine Projektion der Empfängerspulenanordnung senkrecht zu einer Leiterschleifenfläche innerhalb der Leiterschleifenfläche liegt, wobei die Leiterschleifenfläche in einer Ebene liegt, die durch die Leiterschleifenanordnung aufgespannt wird, und wobei die Leiterschleifenfläche durch die Leiterschleifenanordnung begrenzt wird;
Freigeben (228) der Datenübertragung zwischen der Datenübertragungsvorrichtung und der weiteren Datenübertragungsvorrichtung, sofern die Projektion der Empfängerspulenanordnung senkrecht zu der Leiterschleifenfläche innerhalb oder außerhalb der Leiterschleifenfläche liegt;
wobei der Leiterschleifenanordnung (110) eine Positionierungsfläche (151) zugeordnet ist, wobei die Positionierungsfläche (151) parallel zu einer Leiterschleifenebene verläuft, die durch die Leiterschleifenanordnung (110) aufgespannt wird, und wobei die Positionierungsfläche (151) gleich groß oder größer ist, als eine Leiterschleifenfläche (113), die in der Leiterschleifenebene liegt und durch die Leiterschleifenanordnung (110) begrenzt wird;
wobei die Grobpositionsinformationen jeweils einen Grobbereich von mehreren möglichen Grobbereichen (152_x0:152_x2:152_y0:152_y2; 152_z0:152_y2) der Positionierungsfläche (151) anzeigen, wobei sich die durch die Grobpositionsinformationen angezeigten Grobbereiche (152_x0:152_x2:152_y0:152_y2; 152_z0:152_y2) überschneiden; und
wobei die Feinpositionsinformation einen Feinbereich von mehreren möglichen Feinbereichen (154_x0_y0_z0:154_x2_y2_z2) der Positionierungsfläche (151) anzeigt, die durch die Schnittmenge der angezeigten Grobbereiche (152_x0:152_x2:152_y0:152_y2; 152_z0:152_y2) resultiert.

## Claims

1. Measuring device (100), comprising:
a receiver coil array (102) configured to detect three magnetic field components of a magnetic field (108), generated by an electric alternating current signal (106), of a conductor loop array (110) and to provide a magnetic field component signal (112) for each of the detected three magnetic field components, wherein the receiver coil array (102) is configured to detect the three magnetic field components along linearly independent directions; and
evaluation means (104) that is configured to evaluate the magnetic field component signals (112) for determining, for the magnetic field component signals (112), allocated phase relations to the electric alternating current signal (106), wherein the phase relations each comprise coarse position information (152) of the receiver coil array 102 relative to the conductor loop array (110), and wherein the evaluation means (104) is configured to determine a resulting intersection of the coarse position information, wherein the resulting intersection comprises fine position information of the receiver coil array (102) relative to the conductor loop array (110);
wherein a positioning area (151) is allocated to the conductor loop array (110), wherein the positioning area (151) runs parallel to a conductor loop plane that is spanned by the conductor loop array (110) and wherein the positioning area (151) is of the same size or greater than a conductor loop area (113) that is within the conductor loop plane and is limited by the conductor loop array (110);
wherein the coarse position information each indicates a coarse region of several possible coarse regions (152_x0:152_x2:152_y0:152_y2; 152_z0:152_y2) of the positioning area (151), wherein the coarse regions (152_x0:152_x2:152_y0:152_y2; 152_z0:152_y2) indicated by the coarse position information overlap; and
wherein the fine position information indicates a fine region of several possible fine regions (154_x0_y0_z0:154_x2_y2_z2) of the positioning area (151) resulting from the intersection of the indicated coarse regions (152_x0:152_2:152_y0:152_y2; 152_z0:152_y2).

2. Measuring device (100) according to claim 1, wherein the evaluation means (104) is configured to output a position signal based on the fine region (54_x0_y0_z0:154_x2_y2_z2) resulting from the intersection of the indicated coarse regions (152_x0:152_x2:152_y0:152_y2; 152_z0:152_y2), indicating a position of the receiver coil array (102) relative to the conductor loop array (110).

3. Measuring device (100) according to claim 1 or 2, wherein directional information (180_1:180_6) pointing to the geometric centroid (186) of the conductor loop array is allocated to the fine regions (154_x0_y0_z0:154_x2_y2_z2) of the positioning area (151), wherein the evaluation means (104) is configured to output a directional signal (133) indicating an estimated direction to the geometric centroid (186_1:186:6) of the conductor loop array (110) based on the directional information (180_1:180_6) allocated to the fine region (154_x0_y0_z0:154_x2_y2_z2) resulting from the intersection of the indicated coarse regions (152_x0:152_x2:152_y0:152_y2; 152_z0:152_y2).

4. Measuring device (100) according to one of claims 1 to 3, wherein the phase relations that are allocated to the magnetic field component signals (112) are respectively one of a first phase, a second phase or a phase jump, wherein the coarse position information comprised by the phase relations indicates in the phase jump a first coarse region (152_x0:152_y0:152_z0) of the possible coarse regions (152_x0:152_x2:152_y0:152_y2; 152_z0:152_y2), wherein the coarse position information indicates in the first phase a second coarse region (152_x2:152_y2:152_z2) of the possible coarse regions (152_x0:152_x2:152_y0:152_y2; 152_z0:152_y2) and wherein the coarse position information indicates in the second phase a third coarse region (152_x2:152_y2:152_z2) of the possible coarse regions (152_x0:152_x2:152_y0:152_y2; 152_z0:152_y2), wherein the first coarse region (152_x0:152_y0:152_z0), the second coarse region (152_x1:152_y1:152_z1) and the third coarse region (152_x2:152_y2:152_z2) that are indicated by the respective coarse position information do not overlap.

5. Measuring device (100) according to one of claims 1 to 4, wherein the magnetic field (108) of the conductor loop array (110) is generated by an unbalanced electric alternating current signal (106); and
wherein the evaluation means (104) is configured to evaluate the magnetic field component signals (112) for determining amplitude curves of the magnetic field components (138, 144), wherein the amplitude curves (138, 144) each comprise additional position information of the receiver coil array (102) relative to the conductor loop array (110), and wherein the evaluation means (104) is configured to combine the additional position information and the coarse position information or fine position information.

6. Measuring device (100) according to one of claims 1 to 5, wherein the phase relation is a phase shift to the electric alternating current signal or a phase jump.

7. Measuring device (100) according to one of claims 1 to 6, wherein a first phase-relation allocated to a first magnetic field component signal of the magnetic field component signals (112) comprises a phase jump when crossing a conductor region (110_1, 110_2) of the conductor loop array (110).

8. Measuring device (100) according to one of claims 1 to 7, wherein at least a second phase relation allocated to a second magnetic field component signal of the magnetic field component signals (112) comprises a phase jump when crossing a geometric centroid (186) of the conductor loop array (110).

9. Measuring device (100) according to one of claims 1 to 8, wherein the three linearly independent directions are orthogonal directions.

10. Measuring device (100) according to one of claims 1 to 9, wherein the receiver coil array (102) comprises three coils (116_1:116_3) that are arranged relative to one another to detect the three magnetic field components of the generated magnetic field (108) of the conductor loop array (110).

11. Positioning system, comprising:
measuring means (100) according to one of claims 1 to 10; and
a conductor loop array (110).

12. Usage of a measuring device (100) according to one of claims 1 to 11 for positioning a vehicle (114) on a charging device (117) for charging an electric energy storage of the vehicle (114), wherein the charging device comprises the conductor loop array (110).

13. Measuring method (200), comprising:
detecting (202) three magnetic field components of a magnetic field of a conductor loop array generated by an electric alternating current signal, wherein the magnetic field components are detected along linearly independent directions;
providing (204) a magnetic field component signal for each of the detected three magnetic field components; and
evaluating (206) the magnetic field component signals for determining, for the magnetic field component signals, allocated phase relations to the electric alternating current signal, wherein the phase relations each comprise coarse position information of the receiver coil array relative to the toroidal transmitter coil array;
wherein evaluating (206) comprises determining a resulting intersection of the coarse position information, wherein the resulting intersection comprises/results in fine position information of the receiver coil array relative to the conductor loop array;
wherein a positioning area (151) is allocated to the conductor loop array (110), wherein the positioning area (151) runs parallel to a conductor loop plane that is spanned by the conductor loop array (110) and wherein the positioning area (151) is of the same size or greater than a conductor loop area (113) that is within the conductor loop plane and is limited by the conductor loop array (110);
wherein the coarse position information each indicates a coarse region of several possible coarse regions (152_x0:152_x2:152_y0:152_y2; 152_z0:152_y2) of the positioning area (151), wherein the coarse regions (152_x0:152_x2:152_y0:152_y2; 152_z0:152_y2) indicated by the coarse position information overlap, and
wherein the fine position information indicates a fine region of several possible fine regions (154_x0_y0_z0:154_x2_y2_z2) of the positioning area (151) resulting from the intersection of the indicated coarse regions (152_x0:152_x2:152_y0:152_y2; 152_z0: 152_y2).

14. Computer program for performing the method according to claim 13 when the computer program is executed on a computer or microprocessor.

15. Data transmission device (190), comprising:
a data transceiver (192);
a receiver coil array (102) configured to detect three magnetic field components of a magnetic field (108), generated by an electric alternating current signal (106), of a conductor loop array (110) of a further data transmission device (198) and to provide a magnetic field component signal (112) for each of the detected magnetic field components, the receiver coil array (102) being configured to detect the three magnetic field components along linearly independent directions;
evaluation means (104) configured to evaluate magnetic field component signals (112) for determining, for the magnetic field component signals (112), associated phase relations to the electric alternating current signal (106), wherein the phase relations each comprise coarse position information (152) of the receiver coil array 102 in relation to the conductor loop array (110), and wherein the evaluation means (104) is configured to determine a resulting intersection of the coarse position information, the resulting intersection comprising fine position information of the receiver coil array (102) in relation to the conductor loop array (110), said fine position information indicating whether a projection of the receiver coil array (102) is perpendicular to a conductor loop area (113) inside the conductor loop area (113), wherein the conductor loop area (113) is within a plane spanned by the conductor loop array (110), and wherein the conductor loop area (113) is limited by the conductor loop array (110); and
control means (194) configured to enable data transmission of the data transceiver (192) only when the projection of the receiver coil array (102) is perpendicular to the conductor loop area (113) inside or outside the conductor loop area (113);
wherein a positioning area (151) is allocated to the conductor loop array (110), wherein the positioning area (151) runs parallel to a conductor loop plane that is spanned by the conductor loop array (110) and wherein the positioning area (151) is of the same size or greater than a conductor loop area (113) that is within the conductor loop plane and is limited by the conductor loop array (110);
wherein the coarse position information each indicates a coarse region of several possible coarse regions (152_x0:152_x2:152_y0:152_y2; 152_z0:152_y2) of the positioning area (151), wherein the coarse regions (152_x0;152_x2:152_y0:152_y2; 152_z0:152_y2) indicated by the coarse position information overlap, and
wherein the fine position information indicates a fine region of several possible fine regions (154_x0_y0_z0:154_x2_y2_z2) of the positioning area (151) resulting from the intersection of the indicated coarse regions (152_x0:152_x2:152_y0:152_y2; 152_z0:152_y2).

16. Data transmission device (190) according to claim 15, wherein the receiver coil array (102) is configured to detect a magnetic field component of the magnetic field (108) of the conductor loop array (110) running orthogonally to the conductor loop area.

17. Data transmission system, comprising:
a data transmission device (190) according to claim 17 or 18; and
a further data transmission device (198) with the conductor loop array (110).

18. Method (220) for data transmission between a data transmission device (190) and a further data transmission device (198) comprising:
detecting (222) three magnetic field components of a magnetic field of a conductor loop array generated by an electric alternating current signal, the magnetic field components being detected along linearly independent directions;
providing (224) a magnetic field component signal for each of the detected magnetic field components;
evaluating (226) magnetic field component signals for determining, for the magnetic field component signals, associated phase relations to the electric alternating current signal, wherein the phase relations each comprise coarse position information of the receiver coil array in relation to the toroidal transmitter coil array, wherein said evaluating (206) comprises determining a resulting intersection of the coarse position information, the resulting intersection comprising/resulting in fine position information of the receiver coil array in relation to the conductor loop array, said fine position information indicating whether a projection of the receiver coil array is perpendicular to a conductor loop area inside the conductor loop area, wherein the conductor loop area is within a plane that is spanned by the conductor loop array and wherein the conductor loop area is limited by the conductor loop array;
enabling (228) data transmission between the data transmission device and the further data transmission device if the projection of the receiver coil array perpendicular to the conductor loop area is inside or outside the conductor loop area;
wherein a positioning area (151) is allocated to the conductor loop array (110), wherein the positioning area (151) runs parallel to a conductor loop plane that is spanned by the conductor loop array (110) and wherein the positioning area (151) is of the same size or greater than a conductor loop area (113) that is within the conductor loop plane and is limited by the conductor loop array (110);
wherein the coarse position information each indicates a coarse region of several possible coarse regions (152_x0:152_x2:152_y0:152_y2; 152_z0:152_y2) of the positioning area (151), wherein the coarse regions (152_x0:152_x2:152_y0;152_y2; 152_z0:152_y2) indicated by the coarse position information overlap, and
wherein the fine position information indicates a fine region of several possible fine regions (154_x0_y0_z0:154_x2_y2_z2) of the positioning area (151) resulting from the intersection of the indicated coarse regions (152_x0:152_x2:152_y0:152_y2; 152_z0:152_y2).

## Revendications

1. Dispositif de mesure (100), aux caractéristiques suivantes:
un aménagement de bobines de réception (102) qui est conçu pour détecter trois composantes d'un champ magnétique (108), généré par un signal de courant électrique alternatif, d'un aménagement de boucles de conducteurs (110) et pour fournir pour chacune des trois composantes de champ magnétique détectées un signal de composante de champ magnétique (112), où l'aménagement de bobines de réception (102) est conçu pour détecter les trois composantes de champ magnétique dans des directions linéairement indépendantes; et
un moyen d'évaluation (104) qui est conçu pour évaluer les signaux de composante de champ magnétique (112) pour déterminer pour les signaux de composante de champ magnétique (112) les rapports de phase avec le signal de courant électrique alternatif (106) associés, où les rapports de phase présentent, chacun, une information de position grossière (152) de l'aménagement de bobines de réception 102 par rapport à l'aménagement de boucles de conducteurs (110), et où le moyen d'évaluation (104) est conçu pour déterminer une quantité de chevauchement résultante des informations de position grossière, où la quantité de chevauchement résultante présente une information de position fine de l'aménagement de bobines de réception (102) par rapport à l'aménagement de boucles de conducteurs (110);
dans lequel est associée à l'aménagement de boucles de conducteurs (110) une surface de positionnement (151), où la surface de positionnement (151) s'étend en parallèle à un plan de boucles de conducteurs qui est défini par l'aménagement de boucles de conducteurs (110), et où la surface de positionnement (151) est de grandeur égale ou supérieure à une surface de boucles de conducteurs (113) qui se situe dans le plan de boucles de conducteurs et est limitée par l'aménagement de boucles de conducteurs (110);
dans lequel les informations de position grossière indiquent, chacune, une zone grossière parmi plusieurs zones grossières possibles (152_x0:152_x2:152_y0:152_y2; 152_z0:152_y2) de la surface de positionnement (151), où les zones grossières (152_x0:152_x2:152_y0:152-y2; 152_z0:152_y2) indiquées par les informations de position grossière se chevauchent; et
dans lequel l'information de position fine indique une zone fine parmi plusieurs zones fines possibles (154_x0_y0_z0: 154_x2_y2_z2) de la surface de positionnement (151) qui résulte de la quantité de chevauchement des zones grossières indiquées (152_x0:152_x2:152-y0:152_y2; 152_z0:152_y2).

2. Dispositif de mesure (100) selon la revendication 1, dans lequel le moyen d'évaluation (104) est conçu pour sortir, sur base de la zone fine (154_x0_y0_z0:154_x2_y2_z2) qui résulte de la quantité de chevauchement des zones grossières indiquées (52_x0:152_x2: 152_y0:152_y2; 152_z0:152_y2), un signal de position (132) qui indique une position de l'aménagement de bobines de réception (102) par rapport à l'aménagement de boucles de conducteurs (110).

3. Dispositif de mesure (100) selon la revendication 1 ou 2, dans lequel sont associées aux zones fines (154_x0_y0_z0: 154_x2-y2_z2) de la surface de positionnement (151) des informations de direction (180_1:180_6) qui indiquent le centre de gravité géométrique (186) de l'aménagement de boucles de conducteurs, dans lequel le moyen d'évaluation (104) est conçu pour sortir, sur base de l'information de direction (180_1:180_6) qui est associée à la zone fine (154_x0_y0_z0:154_x2_y2_z2) qui résulte de la quantité de chevauchement des zones grossières indiquées (152_x0:152_x2:152_y0:152_y2; 152_z0:152_y2), un signal de direction (133) qui indique une direction estimée par rapport au centre de gravité géométrique (186_1:186:6) de l'aménagement de boucles de conducteurs (110).

4. Dispositif de mesure (100) selon l'une des revendications 1 à 3, dans lequel les rapports de phase qui sont sont associés aux signaux de composante de champ magnétique (112) sont, chacun, l'un parmi une première phase, une deuxième phase ou un saut de phase, dans lequel l'information de position grossière qu'indiquent respectivement les rapports de phase indique, dans le cas du saut de phase, une première zone grossière (152_x0; 152-y0; 152_z0) parmi les zones grossières possibles (152_x0:152_x2:152_y0: 152_y2; 152_z0:152_y2), dans lequel l'information de position grossière indique, dans le cas de la première phase, une deuxième zone grossière (152_x2;152_y2; 152_z2) parmi les zones grossières possibles (152_x0:152_x2:152_y0:152_y2; 152_z0:152_y2), et dans lequel l'information de position grossière indique, dans le cas de la deuxième phase, une troisième zone grossière (152_x2; 152_y2; 152_z2) parmi les zones grossières possibles (152_x0:152_x2: 152_y0:152_y2; 152_z0:152_y2), dans lequel la première zone grossière (152_x0; 152-30; 152_z0), la deuxième zone grossière (152_x1; 152_y1; 152_z1) et la troisième zone grossière (152_x2; 152_y2; 152_z2) qui sont indiquées par l'information de position grossière respective ne se chevauchent pas.

5. Dispositif de mesure (100) selon l'une des revendications 1 à 4, dans lequel le champ magnétique (108) de l'aménagement de boucles de conducteurs (110) est généré par un signal de courant électrique alternatif asymétrique (106); et
dans lequel le moyen d'évaluation (104) est conçu pour évaluer les signaux de composante de champ magnétique (112) pour déterminer les évolutions d'amplitude des composantes de champ magnétique (138, 144), où les évolutions d'amplitude (138, 144) présentent, chacune, une information de position additionnelle de l'aménagement de bobines de réception (102) par rapport à l'aménagement de boucles de conducteurs (110), et dans lequel le moyen d'évaluation (104) est conçu pour combiner les informations de position additionnelles et les informations de position grossière
ou l'information de position fine.

6. Dispositif de mesure (100) selon l'une des revendications 1 à 5, dans lequel le rapport de phase est un déphasage par rapport au signal de courant électrique alternatif ou à un saut de phase.

7. Dispositif de mesure (100) selon l'une des revendications 1 à 6, dans lequel un premier rapport de phase qui est associé à un premier signal parmi les signaux de composante de champ magnétique (112) présente un saut de phase lors de la traversée d'une zone de conducteurs (110_1, 110_2) de l'aménagement de boucles de conducteurs (110).

8. Dispositif de mesure (100) selon l'une des revendications 1 à 7, dans lequel au moins un deuxième rapport de phase qui est associé à un deuxième signal parmi les signaux de composante de champ magnétique (112) présente un saut de phase lors de la traversée d'un centre de gravité géométrique (186) de l'aménagement de boucles de conducteurs (110).

9. Appareil de mesure (100) selon l'une des revendications 1 à 8, dans lequel les trois directions linéairement indépendantes sont des directions orthogonales.

10. Dispositif de mesure (100) selon l'une des revendications 1 à 9, dans lequel l'aménagement de bobines de réception (102) présente trois bobines (116_1:116_3) qui sont disposées l'une par rapport à l'autre de manière à détecter les trois composantes du champ magnétique généré (108) de l'aménagement de boucles de conducteurs (110).

11. Système de positionnement, aux caractéristiques suivantes:
un dispositif de mesure (100) selon l'une des revendications 1 à 10; et
un aménagement de boucles de conducteurs (110).

12. Utilisation d'un dispositif de mesure (100) selon l'une des revendications 1 à 11 pour positionner un véhicule (114) sur un dispositif de chargement (117) pour charger un accumulateur d'énergie électrique du véhicule (114), où le dispositif de chargement présente l'aménagement de boucles de conducteurs (110) .

13. Procédé de mesure (200), aux étapes suivantes consistant à:
détecter (202) trois composantes d'un champ magnétique, généré par un signal de courant électrique alternatif, d'un aménagement de boucles de conducteurs, où les composantes de champ magnétique sont détectées dans des directions linéairement indépendantes;
fournir (204) un signal de composante de champ magnétique pour chacune des trois composantes de champ magnétique détectées; et
évaluer (206) les signaux de composante de champ magnétique pour déterminer, pour les signaux de composantes de champ magnétique, des rapports de phase avec le signal de courant électrique alternatif associés, où les rapports de phase présentent, chacun, une information de position grossière de l'aménagement de bobines de réception par rapport à l'aménagement de bobines annulaires d'émission;
dans lequel l'évaluation (206) présente le fait de déterminer une quantité de chevauchement résultante des informations de position grossière, où la quantité de chevauchement résultante présente/résulte en une information de position fine de l'aménagement de bobines de réception par rapport à l'aménagement de boucles de conducteurs;
dans lequel est associée à l'aménagement de boucles de conducteurs (110) une surface de positionnement (151), où la surface de positionnement (151) s'étend en parallèle avec un plan de boucles de conducteurs qui est défini par l'aménagement de boucles de conducteurs (110), et où la surface de positionnement (151) est d'une grandeur égale ou supérieure à une surface de boucles de conducteurs (113) qui est située dans le plan de boucles de conducteurs, et est limitée par l'aménagement de boucles de conducteurs (110);
dans lequel les informations de position grossière indiquent, chacune, une zone grossière parmi plusieurs zones grossières possibles (152_x0:152_x2:152_y0:152_y2; 152_z0:152_y2) de la surface de positionnement (151), où les zones grossières (152_x0:152_x2:152._y0:152_y2; 152_z0:152_y2) indiquées par les informations de position grossière se chevauchent; et
dans lequel l'information de position fine indique une zone fine parmi plusieurs zones fines possibles (154_x0_y0_z0: 154_x2-y2_z2) de la surface de positionnement (151) qui résulte de la quantité de chevauchement des zones grossières indiquées (152_x0:152_x2:152_y0:152_y2; 152_z0:152_y2).

14. Programme d'ordinateur pour réaliser le procédé selon la revendication 13 lorsque le programme d'ordinateur est exécuté sur un ordinateur ou un microprocesseur.

15. Dispositif de transmission de données (190), aux caractéristiques suivantes:
un moyen de transmission de données et/ou de réception de données (192);
un aménagement de bobines de réception (102) qui est conçu pour détecter trois composantes d'un champ magnétique (108) d'un aménagement de boucles de conducteurs (110) d'un autre dispositif de transmission de données (198) et pour fournir, pour chacune des composantes de champ magnétique détectées, un signal de composante de champ magnétique (112), où l'aménagement de bobines de réception (102) est conçu pour détecter les trois composantes de champ magnétique dans des directions linéairement indépendantes;
un moyen d'évaluation (104) qui est conçu pour évaluer les signaux de composante de champ magnétique (112) pour déterminer, pour les signaux de composante de champ magnétique (112), les rapports de phase avec le signal de courant électrique alternatif (106) associés, où les rapports de phase présentent, chacun, une information de position grossière (152) de l'aménagement de bobines de réception (102) par rapport à l'aménagement de boucles de conducteurs (110), et où le moyen d'évaluation (104) est conçu pour déterminer une quantité de chevauchement résultante des informations de position grossière, où la quantité de chevauchement résultante présente une information de position fine de l'aménagement de bobines de réception (102) par rapport à l'aménagement de boucles de conducteurs (110) qui indique si une projection de l'aménagement de bobines de réception (102) se trouve perpendiculaire à une surface de boucles de conducteurs (113) dans la surface de boucles de conducteurs (113), où la surface de boucles de conducteurs (113) se situe dans un plan qui est défini par l'aménagement de boucles de conducteurs (110), et où la surface de boucles de conducteurs (112) est limitée par l'aménagement de boucles de conducteurs (110); et
un moyen de commande (194) qui est conçu pour ne permettre une transmission de données par le moyen de transmission de données et/ou de réception de données (192) que lorsque la projection de l'aménagement de bobines de réception (102) est perpendiculaire à la surface de boucles de conducteurs (113) dans ou hors de la surface de boucles de conducteurs (113);
dans lequel est associée à l'aménagement de boucles de conducteurs (110) une surface de positionnement (151), où la surface de positionnement (151) s'étend en parallèle avec un plan de boucles de conducteurs qui est défini par l'aménagement de boucles de conducteurs (110), et où la surface de positionnement (151) est d'une grandeur égale ou supérieure à une surface de boucles de conducteurs (113) qui est située dans le plan de boucles de conducteurs, et est limitée par l'aménagement de boucles de conducteurs (110);
dans lequel les informations de position grossière indiquent, chacune, une zone grossière parmi plusieurs zones grossières possibles (152_x0:152_x2:152_y0:152_y2; 152_z0:152_y2) de la surface de positionnement (151), où les zones grossières (152_x0:152_x2:152_y0:152_y2; 152_z0:152_y2) indiquées par les informations de position grossière se chevauchent; et
dans lequel l'information de position fine indique une zone fine parmi plusieurs zones fines possibles (154_x0_y0_z0: 154_x2_y2_z2) de la surface de positionnement (151) qui résulte de la quantité de chevauchement des zones grossières indiquées (152_x0:152_x2:152_y0:152_y2; 152_z0:152_y2).

16. Dispositif de transmission de données (190) selon la revendication 15, dans lequel l'aménagement de bobines de réception (102) est conçu pour détecter une composante du champ magnétique (108) de l'aménagement de boucles de conducteurs (110) qui s'étend orthogonale à la surface de boucles de conducteurs.

17. Système de transmission de données, aux caractéristiques suivantes:
un dispositif de transmission de données (190) selon la revendication 17 ou 18; et
un autre dispositif de transmission de données (198) avec l'aménagement de boucles de conducteurs (110).

18. Procédé (220) pour transmettre des données entre un dispositif de transmission de données (190) et un autre dispositif de transmission de données (198), aux étapes suivantes consistant à:
détecter (222) trois composantes d'un champ magnétique, généré par un signal de courant électrique alternatif, d'un aménagement de boucles de conducteurs, où les composantes de champ magnétique sont détectées dans des directions linéairement indépendantes;
fournir (224) un signal de composante de champ magnétique pour chacune des composantes de champ magnétique détectées;
évaluer (226) les signaux de composante de champ magnétique pour déterminer, pour les signaux de composante de champ magnétique, des rapports de phase avec le signal de courant électrique alternatif associés, où les rapports de phase présentent, chacun, une information de position grossière de l'aménagement de bobines de réception par rapport à l'aménagement de bobines annulaires d'émission, où l'évaluation (206) présente le fait de déterminer une quantité de chevauchement résultante des informations de position grossière, où la quantité de chevauchement résultante présente/résulte en une information de position fine de l'aménagement de bobines de réception par rapport aux l'aménagement de boucles de conducteurs qui indique si une projection de l'aménagement de bobines de réception se trouve perpendiculaire à une surface de boucles de conducteurs dans la surface de boucles de conducteurs, où la surface de boucles de conducteurs se situe dans un plan qui est défini par l'aménagement de boucles de conducteurs, et où la surface de boucles de conducteurs est limitée par l'aménagement de boucles de conducteurs;
permettre (228) la transmission de données entre le dispositif de transmission de données et l'autre dispositif de transmission de données au cas où la projection de l'aménagement de bobines de réception est perpendiculaire à la surface de boucles de conducteurs dans ou hors de la surface de boucles de conducteurs;
dans lequel est associée à l'aménagement de boucles de conducteurs (110) une surface de positionnement (151), où la surface de positionnement (151) s'étend en parallèle avec un plan de boucles de conducteurs qui est défini par l'aménagement de boucles de conducteurs (110), et où la surface de positionnement (151) est d'une grandeur égale ou supérieure à une surface de boucles de conducteurs (113) située dans le plan de boucles de conducteurs et est limitée par l'aménagement de boucles de conducteurs (110);
dans lequel les informations de position grossière indiquent, chacune, une zone grossière parmi plusieurs zones grossières possibles (152_x0:152_x2:152_y0:152_y2; 152_z0:152_y2) de la surface de positionnement (151), où les zones grossières (152_x0:152_x2:152_y0:152_y2; 152_z0:152_y2) indiquées par les informations de position grossière se chevauchent; et
dans lequel l'information de position fine indique une zone fine parmi plusieurs zones fines possibles (154_x0_y0_z0: 154_x2_y2_z2) de la surface de positionnement (151) qui résulte de la quantité de chevauchement des zones grossières indiquées (152_x0:152_x2:152_y0:152_y2; 152_z0:152_y2).
